# EUROPÄISCHE PATENTSCHRIFT

(11) **EP 4 295 605 B1**
(45) Veröffentlichungstag und Bekanntmachung des Hinweises auf die Patenterteilung: **27.11.2024**
(21) Anmeldenummer: 22710967.5
(22) Anmeldetag: 17.02.2022
(51) Int. Cl.: H04W 12/06, H04L 9/08, H04L 9/32, H04W 12/08

(54) **NUTZERAUTHENTIFIZIERUNG UNTER VERWENDUNG ZWEIER UNABHÄNGIGER SICHERHEITSELEMENTE**
USER AUTHENTICATION BY MEANS OF TWO INDEPENDENT SECURITY ELEMENTS
AUTHENTIFICATION D'UTILISATEUR À L'AIDE DE DEUX ÉLÉMENTS DE SÉCURITÉ INDÉPENDANTS

(30) Priorität: 19.02.2021 DE 102021103997
(43) Veröffentlichungstag der Anmeldung: 27.12.2023
(73) Patentinhaber: Bundesdruckerei GmbH, 10969 Berlin (DE); Freie Universität Berlin, 14195 Berlin (DE)
(72) Erfinder: DIETRICH, Frank, 12437 Berlin (DE); SCHWAN, Matthias, 13086 Berlin (DE); FRITSCHE, Marcus, 13507 Berlin (DE); OHLENDORF, Tim, 12163 Berlin (DE); MARGRAF, Marian, 14542 Werder (DE)
(74) Vertreter: Richardt Patentanwälte PartG mbB
(86) Internationale Anmeldenummer: PCT/EP2022/053982
(87) Internationale Veröffentlichungsnummer: WO 2022/175398

(56) Entgegenhaltungen:
- US-A1- 2009 100 269
- US-A1- 2016 005 032
- US-B1- 10 778 450

## Beschreibung

Die Erfindung ist in den unabhängigen Ansprüchen definiert. Besondere Ausführungsformen sind in den abhängigen Ansprüchen angegeben.

Die Erfindung betrifft ein Verfahren zum Authentifizieren eines Nutzers gegenüber einem auf einem mobilen Endgerät installierten Anwendungsprogramm sowie ein mobiles Endgerät und ein System zum Ausführen des Verfahrens.

Mobile Endgeräte, wie beispielsweise Smartphones, sind allgegenwärtig. Sie werden in vielen Lebensbereichen und Situationen zur Erfüllung verschiedenster Aufgaben im digitalen Bereich bzw. unter Zuhilfenahme digitaler Hilfsmittel verwendet. Dabei finden ein und dieselben mobile Endgeräte Verwendung sowohl in Bereichen mit niedrigen Sicherheitsanforderungen als auch in Bereichen mit hohen Sicherheitsanforderungen.

Mithin müssen entsprechende mobile Endgeräte in der Lage sein auch solch hohen Sicherheitsanforderungen zu erfüllen. Die Sicherheit mobiler Endgeräte, wie Smartphones, ist daher zu einer relevanten Anforderung geworden für die Hersteller der Geräte, für die Hersteller der auf den Geräten installierten Programmen sowie für Anbieter von Dienstleistungen, welche unter Verwendung der Geräte genutzt werden können. Um die Sicherheit der Nutzung sicherstellen zu können, ist eine sichere Authentifizierung des tatsächlichen Nutzers des Endgeräts von zentraler Bedeutung. Aus Sicht von Herstellern von Programmen sowie Anbieter von Dienstleistungen gestaltet sich dabei insbesondere eine Implementierung eines einheitlich hohen Sicherheitsstandards für Geräte unterschiedlicher Hersteller als Herausforderung.

In den technischen Richtlinien des Bundesamt für Sicherheit in der Informationstechnik "Technical Guideline TR-03159 Mobile Identities Part 1: Security Requirements for elDAS LoA "substantial"", Version 1.0 Draft 2 vom 26. August 2019 und "Technical Guideline TR-03159-2 Mobile Identities Amendment A - Provisionierung und Personalisierung", Version 1.0.0 Draft vom 4. November 2020 werden implementierungsunabhängige Anforderungen für mobile Identifizierungsszenarien definiert sowie ein Verfahren beschrieben, welches es ermöglicht Identität von einer Ausweiskarte auszulesen, auf handelsüblichen SIM Karten oder sicheren Elementen in Mobiltelefonen zu speichern und diese anschließend als elektronisches Identifizierungsmittel zu verwenden.

Die US 10 778 450 B1 beschreibt ein Verfahren zur gestenbasierten Multi-Faktor-Authentifizierung, welches ein Empfangen eines Gestenpassworts von einem Nutzer umfasst. Das Gestenpasswort wird auf eine erste Substitutionszeichenfolge abgebildet. Ein kryptografischer Schlüssel wird unter Verwendung der Substitutionszeichenfolge als Eingabe für ein passwortauthentifiziertes Schlüsselaustauschprotokoll ("PAKE") erzeugt. Eine Challenge-Response wird mit dem kryptografischen Schlüssel verschlüsselt, um eine verschlüsselte Challenge-Response zu erzeugen. Eine Nutzerkennung und die verschlüsselte Challenge-Frage werden an eine Relying Party übermittelt. Die verschlüsselte Challenge-Response kann von der Relying Party verifiziert werden, indem die erste Substitutionszeichenfolge basierend auf der Nutzerkennung abgerufen wird, der kryptografische Schlüssel unter Verwendung der ersten Substitutionszeichenfolge als eine Eingabe in das PAKE-Protokoll erzeugt wird, die verschlüsselte Abfrageantwort unter Verwendung des kryptografischen Schlüssels entschlüsselt wird, und die Challenge-Response verifiziert wird, um so den Nutzer zu authentifizieren.

Der Erfindung liegt die Aufgabe zugrunde, ein Verfahren zum Authentifizieren eines Nutzers gegenüber einem auf einem mobilen Endgerät installierten Anwendungsprogramm zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Authentifizieren eines Nutzers gegenüber einem auf einem mobilen Endgerät installierten Anwendungsprogramm. Auf dem Endgerät ist ein Betriebssystem installiert. Das Betriebssystem ist dazu konfiguriert zumindest einen Authentifizierungssensor des Endgeräts zum Erfassen zumindest eines Authentifizierungsfaktors des Nutzers zu steuern. Das Endgerät umfasst ein dem Betriebssystem zugeordnetes erstes Sicherheitselement. Das erste Sicherheitselement umfasst kryptographische Mittel zum Ausführen eines Challenge-Response-Verfahrens. In einem geschützten Speicherbereich des ersten Sicherheitselements ist ein privater kryptographischer Schlüssel eines asymmetrischen Schlüsselpaars des ersten Sicherheitselements gespeichert.

Ferner wird ein von dem ersten Sicherheitselement unabhängiges dem Anwendungsprogramm zugeordnetes zweites Sicherheitselement bereitgestellt. Das zweite Sicherheitselement umfasst kryptographische Mittel zum Ausführen eines Challenge-Response-Verfahrens.

Das Verfahren umfasst:
- auf eine Authentifizierungsanfrage des Anwendungsprogramms hin, Authentifizieren des Nutzers durch das Betriebssystem unter Verwendung des Authentifizierungssensors und des ersten Sicherheitselements,
- Ausführen eines Challenge-Response-Verfahrens zwischen dem ersten Sicherheitselement und dem zweiten Sicherheitselement, wobei das Challenge-Response-Verfahren ein Erzeugen einer Response durch das ersten Sicherheitselement und ein Validieren der Response durch das zweite Sicherheitselement umfasst, wobei das Erzeugen der Response ein Verschlüsseln einer Challenge des zweiten Sicherheitselements durch das erste Sicherheitselement unter Verwendung des privaten kryptographischen Schlüssels des ersten Sicherheitselements umfasst und wobei das Validieren der Response ein Entschlüsseln der Response des ersten Sicherheitselements durch das zweite Sicherheitselement unter Verwendung eines öffentlichen kryptographischen Schlüssels des asymmetrischen Schlüsselpaars des ersten Sicherheitselements umfasst, wobei ein erfolgreiches Ausführen des Challenge-Response-Verfahrens eine erfolgreiche Authentifizierung des Nutzers durch das Betriebssystem bestätigt,
- auf ein erfolgreiches Ausführen des Challenge-Response-Verfahrens hin, Bestätigen der erfolgreichen Authentifizierung des Nutzers gegenüber dem Anwendungsprogramm durch das zweite Sicherheitselement.

Das mobile Endgerät kann beispielsweise als Authentisierungstoken, Autorisierungstoken und/oder als Identitätsnachweis, d.h. ID-Token, dienen, etwa in elektronischen Geschäftsprozessen. Zu diesem Zweck kann der Nutzer durch das mobile Endgerät sicher authentifiziert werden. Nach Ausführungsformen kann die lokale Authentifizierung des Nutzers durch das Endgerät als Grundlage für eine weitere Authentifizierung des Nutzers unter Verwendung von, beispielsweise auf dem Endgerät gespeicherten, Identitätsattributen dienen. Bei einer solchen weiteren Authentifizierung handelt es sich beispielsweise um eine Authentifizierung durch einen ID-Provider-Dienst.

Das mobile Endgerät ist für eine sichere Nutzerauthentifizierung unter Verwendung des Authentifizierungssensors und des Betriebssystems bzw. des ersten Sicherheitselements konfiguriert. Die Authentifizierung kann beispielsweise auf einem Erfassen und Auswerten biometrischer Merkmale des Nutzers beruhen.

Ausführungsformen können den Vorteil haben, dass Hersteller von Anwendungsprogrammen bzw. die entsprechenden Anwendungsprogramme auf die Authentifizierungsfunktionalität des mobilen Endgeräts zur Nutzerauthentifizierung zurückgreifen können. Die Authentifizierungsfunktionalität des Endgeräts unter Verwendung des Authentifizierungssensors und des ersten Sicherheitselements implementiert eine sichere Bindung des Nutzers mit dem Endgerät. Es fehlt aber an einer vergleichbar sicheren Bindung des Endgeräts oder des Nutzers an das entsprechende Anwendungsprogramm. Ohne weitere Sicherungsmechanismen kann aus einer Nutzung des Anwendungsprogramms weder sicher darauf geschlossen werden, dass eine Nutzung des Endgeräts vorliegt, noch darauf, dass ein bestimmter Nutzer das Endgerät nutzt. Eine solche sichere Bindung kann durch Verwendung des zweiten Sicherheitselements implementiert werden. Das zweite Sicherheitselement ist dem Anwendungsprogramm zugeordnet, beispielsweise indem ein Applet des Anwendungsprogramms in dem zweiten Sicherheitselement installiert ist. Dabei stellt das erste Sicherheitselement, bei welchem es sich beispielsweise um ein hardwarebasiertes Sicherheitselement des Geräteherstellers handelt, kryptographische Mittel, wie etwa kryptographisches Schlüsselmaterial und Protokolle, zur Verfügung, welche für eine sichere Zurverfügungstellung der Authentifizierungsergebnisse des Endgeräts für ein auf dem Endgerät installiertes Anwendungsprogramm genutzt werden können. Mithin stellt das erste Sicherheitselement die kryptographische Sicherheit des Betriebssystems sicher bzw. stellt dem Betriebssystem kryptographische Sicherungsfunktionalität zur Verfügung. Nach Ausführungsformen kann es sich bei dem ersten Sicherheitselement beispielsweise auch um ein softwarebasiertes und/oder firmwarebasiertes Sicherheitselement des Geräteherstellers handeln.

Das zweite Sicherheitselement, welches unter Verwendung des Challenge-Response-Protokolls sicher mit dem ersten Sicherheitselement kommuniziert, kann eine sichere Verbindung mit dem ersten Sicherheitselement gewährleisten. Beispielsweise umfasst das Endgerät neben dem ersten Sicherheitselement zusätzlich das zweite Sicherheitselement. Durch die sichere Verbindung wird eine sichere Anbindung des zweiten Sicherheitselements an das erste Sicherheitselement und damit an das Endgerät und/oder dessen Nutzer implementiert. Diese sichere Anbindung erlaubt es, das zweite Sicherheitselement auch als externe Komponente, beispielsweise auf einem externen Server, bereitzustellen.

Das zweite Sicherheitselement umfasst beispielsweise ein Applet des Anwendungsprogramms. Das zweite Sicherheitselement stellt kryptographische Mittel, wie etwa kryptographisches Schlüsselmaterial und Protokolle, zur Verfügung, welche dem Anwendungsprogramm zugeordnet sind und unter dessen Verfügungshoheit und/oder der Verfügungshoheit des Herstellers des Anwendungsprogramms stehen. Mithin stellt das zweite Sicherheitselement die kryptographische Sicherheit des Anwendungsprogramms sicher bzw. stellt dem Anwendungsprogramm kryptographische Sicherungsfunktionalität zur Verfügung. Bei dem zweiten Sicherheitselement handelt es sich beispielsweise um ein hardware-, software- und/oder firmwarebasiertes Sicherheitselement. Beispielsweise umfasst das zweite Sicherheitselement eine eSIM oder eine eUICC.

Die Erfindung beschreibt ein Verfahren zur sicheren Authentisierung eines Nutzers an einem mobilen Endgerät sowie der sicheren Authentifizierung des Nutzers durch ein weiteres Sicherheitselement. Das weitere Sicherheitselement kann beispielsweise auf dem entsprechenden mobilen Endgerät, etwa mit einer geräteherstellerunabhängigen Sicherheitsapplikation bzw. Sicherheitsapplet, bereitgestellt werden. Beispielsweise wird das weitere Sicherheitselement als externe Komponente, etwa auf einem externen Server zur Nutzung für das auf dem mobilen Endgerät installierte Anwendungsprogramm bereitgestellt.

Insbesondere wird eine sichere Verwendung von Merkmalen zur Nutzerauthentifizierung, wie etwa biometrische Merkmale, für eine Authentifizierung gegenüber einem geräteherstellerunabhängigen Anwendungsprogramm und/oder Sicherheitsapplet des Anwendungsprogramms ermöglicht.

Nach Ausführungsformen wird zur Authentifizierung des Nutzers gegenüber dem Anwendungsprogramm ein Challenge-Response Verfahren verwendet, welches zwischen dem gerätespezifischen ersten Sicherheitselement und dem geräteunabhängigen zweiten Sicherheitselement ausgeführt wird. Bei dem zweiten Sicherheitselement handelt es sich beispielsweise um ein anwendungsspezifisches Sicherheitselement oder ein dem Anwendungsprogramm zugeordnetes Sicherheitselement. Auf dem zweiten Sicherheitselement ist beispielsweise ein Sicherheitsapplet des Anwendungsprogramms installiert, bei welchem es sich beispielsweise um ein anwendungsspezifisches Sicherheitsapplet handelt.

Zum Implementieren der kryptographisch gesicherten Verbindung zwischen dem ersten und dem zweiten Sicherheitselement wird beispielsweise in das geräteherstellerabhängige erste Sicherheitselement kryptographisches Schlüsselmaterial eingebracht und/oder in diesem erzeugt. Beispielsweise wird ein asymmetrisches Schlüsselpaar des ersten Sicherheitselements auf diesem erzeugt. Beispielsweise wird Schlüsselmaterial eingebracht, welches den privaten kryptographischen Schlüssel des asymmetrischen Schlüsselpaars des ersten Sicherheitselements umfasst. Ferner umfasst das eingebrachte Schlüsselmaterial beispielsweise den öffentlichen kryptographischen Schlüssel des asymmetrischen Schlüsselpaars des ersten Sicherheitselements. Dies geschieht beispielsweise im Zuge einer Initialisierung des mobilen Endgeräts. Im Falle eines Einbringens des asymmetrischen Schlüsselpaars, etwa durch einen Initialisierungsserver, wird das entsprechende Schlüsselpaar durch den Initialisierungsserver erstellt. Alternativerweise wird das asymmetrische Schlüsselpaar durch einen weiteren Server erzeugt und dem Initialisierungsserver zum Einbringen in das erste Sicherheitselement bereitgestellt. Beispielsweise wird der öffentliche kryptographische Schlüssel des ersten Sicherheitselements als Bestandteil eines Zertifikats bereitgestellt und/oder es wird ein Zertifikat bereitgestellt, welches den entsprechenden öffentlichen kryptographischen Schlüssel umfasst. Beispielsweise ist das Zertifikat von dem Initialisierungsserver und/oder dem weiteren, das asymmetrische Schlüsselpaar des ersten Sicherheitselements erzeugenden Server signiert. Beispielsweise ist das Zertifikat Bestandteil einer PKI, welche den Initialisierungsserver und/oder den weiteren, das asymmetrische Schlüsselpaar des ersten Sicherheitselements erzeugenden Server umfasst. Dabei ist das Zertifikat des öffentlichen kryptographischen Schlüssels des ersten Sicherheitselements mit einem Signaturschlüssel des Initialisierungsserver und/oder des Weiteren, das asymmetrische Schlüsselpaar des ersten Sicherheitselements erzeugenden Server signiert.

Der private kryptographische Schlüssel des ersten Sicherheitselements wird in einem geschützter Speicherbereich des ersten Sicherheitselements gespeichert. Bei dem geschützten Speicherbereich des ersten Sicherheitselements kann es sich beispielsweise um einen Speicherbereich eines Speichers des ersten Sicherheitselements im Falle eines Hardwaresicherheitselements handeln. Im Falle eines Firmware- oder Softwaresicherheitselements handelt es sich bei dem geschützten Speicherbereich des ersten Sicherheitselements beispielsweise um einen dem ersten Sicherheitselement zugeordneten bzw. von diesem verwalteten Speicherbereich eines Speichers des mobilen Endgeräts handeln. Unter einem "geschützten Speicherbereich" wird hier ein Bereich eines elektronischen Speichers verstanden, auf den ein Zugriff, das heißt ein Lesezugriff oder ein Schreibzugriff, beschränkt ist. Eine Zugriffsbeschränkung kann beispielsweise eine zu erfüllende Bedingung sein. Bei der entsprechenden Bedingung kann es sich zum Beispiel um eine kryptographische Bedingung, insbesondere eine erfolgreiche Authentisierung und/oder eine erfolgreiche Berechtigungsprüfung, handeln. Eine solche Prüfung kann beispielsweise auf einer elektronischen Signatur mit einem Signaturschlüssel beruhen. Ein Zugriff kann beispielsweise darauf beschränkt sein, dass er nur über einen Prozessor des Sicherheitselements oder nur über einen Prozessor des mobilen Endgeräts möglich ist. Beispielsweise ist auf den geschützten Speicherbereich kein externer Zugriff über einen Bus möglich.

Ferner wird in das geräteherstellerunabhängige zweite Sicherheitselement kryptographisches Schlüsselmaterial eingebracht und/oder in diesem erzeugt. Beispielweise wird in ein geräteherstellerunabhängiges Sicherheitsapplet des zweiten Sicherheitselements kryptographisches Schlüsselmaterial eingebracht und/oder in diesem erzeugt. Dies geschieht beispielsweise im Zuge einer Initialisierung und/oder Provisionierung des zweiten Sicherheitselements. Beispielsweise geschieht dies im Zuge einer Initialisierung und/oder Provisionierung des Sicherheitsapplets des zweiten Sicherheitselements, welches dem Anwendungsprogramm zugeordnet ist. Beispielsweise umfasst das eingebrachte kryptographische Schlüsselmaterial den öffentlichen kryptographischen Schlüssel des ersten Sicherheitselements. Beispielsweise kann das kryptographisch initialisierte erste Sicherheitselement den öffentlichen kryptographischen Schlüssel des ersten Sicherheitselements in das zweite Sicherheitselement und/oder das Sicherheitsapplet des zweiten Sicherheitselements einbringen bzw. diesem zur Verfügung stellen. Ebenso kann das zweite Sicherheitselement und/oder das Sicherheitsapplet des zweiten Sicherheitselements einen kryptographischen Schlüssel des zweiten Sicherheitselements und/oder des Sicherheitsapplets des zweiten Sicherheitselements in das erste Sicherheitselement einbringen bzw. diesem zur Verfügung stellen. Beispielsweise kann ein Provisionierungsserver den öffentlichen kryptographischen Schlüssel des ersten Sicherheitselements in das zweite Sicherheitselement und/oder das Sicherheitsapplet des zweiten Sicherheitselements einbringen.

Ausführungsformen stellen somit ein Verfahren zur Authentisierung eines Nutzers durch Verwendung eines Authentisierungsverfahrens eines mobilen Endgerätes zur Authentisierung an einem weiteren Sicherheitselement, z.B. mit einem Applet oder als einem Remote-Sicherheitselement implementiert, das unabhängig und nicht unter der Kontrolle des Geräteherstellers ist. Dabei wird eine Authentifizierung des Nutzers des mobilen Endgerätes durch das weiteres Sicherheitselement ermöglicht. Ein Einbringen von kryptographischem Schlüsselmaterial, insbesondere einen öffentlichen kryptographischen Schlüssel des ersten Sicherheitselementes des Geräteherstellers in das vom Gerätehersteller unabhängige Sicherheitsapplet oder das Remote-Sicherheitselement erfolgt beispielsweise im Zuge einer Provisionierung.

Ferner wird ein Challenge Response Verfahren zwischen gerätespezifischem ersten und geräteunabhängigen zweiten Sicherheitselement zur Authentisierung des Nutzers basierend auf einem Signaturverfahre ausgeführt. Hierbei sendet das geräteherstellerunabhängige zweite Sicherheitselement ein Nonce an das erste Sicherheitselement des Geräteherstellers, beispielsweise auf Anfrage. Der Nutzer authentisiert sich, beispielsweise durch Eingabe einer PIN oder eines biometrischen Merkmales. Auf ein erfolgreiche Nutzerauthentifizierung hin wird eine Signatur des Nonce ausführt. Das geräteherstellerunabhängige zweite Sicherheitselement empfängt die resultierende Signatur als Response und prüft dies mit dem, beispielsweise während der Provisionierung eingebrachten öffentlichen Schlüssel.

Nach Ausführungsformen wird von dem zweiten Sicherheitselement und/oder dem Sicherheitsapplet des zweiten Sicherheitselements eine Challenge zum Ausführen des Challenge-Response-Verfahren erzeugt und an das erste Sicherheitselement übertragen. Bei der Challenge handelt es sich beispielsweise um einen Zufallswert, insbesondere um ein Nonce.

Bei einem Nonce handelt es sich um eine beliebige Zahl oder beliebige Zeichenfolge, die in einer kryptographischen Kommunikation nur zu einer einmaligen Verwendung vorgesehen ist. Bei dem Nonce handelt es sich beispielsweise um eine Zufalls- oder Pseudozufallszahl. Ein Nonce kann im Zuge eines Challenge-Response-Verfahrens verwendet werden, um sicherzustellen, dass alte Responses bzw. Antworten bei Wiederholungsangriffen bzw. Replay-Attacken nicht wiederverwendet werden können. Ein Nonce kann beispielsweise zeitvariant konfiguriert sein, etwa indem es einen Zeitstempel umfasst oder indem ein Zeitstempel zum Erzeugen des Nonce verwendet wird. Ferner kann ein Nonce so konfiguriert sein bzw. erzeugt werden, dass es eine ausreichende Anzahl an zufälligen Bits umfasst, sodass die Wahrscheinlichkeit dafür einen bereits zuvor generierten Wert des Nonce zu wiederholen vernachlässigbar ist.

Beispielsweise erzeugt das zweite Sicherheitselement und/oder das Sicherheitsapplet des zweiten Sicherheitselements die Challenge, etwa ein Nonce, und überträgt dieses an das erste Sicherheitselement. Das erste Sicherheitselement initiiert eine Authentifizierung des Nutzers. Auf eine erfolgreiche Authentifizierung des Nutzers hin, signiert das erste Sicherheitselement die Challenge unter Verwendung des privaten kryptographischen Schlüssels des ersten Sicherheitselements. Die signierte Challenge wird als Response an das zweite Sicherheitselement gesendet. Das zweite Sicherheitselement und/oder das Sicherheitsapplet des zweiten Sicherheitselements prüfen die Response unter Verwendung des öffentlichen kryptographischen Schlüssels des ersten Sicherheitselements. Bei der signierten Challenge handelt es sich beispielsweise um einen unter Verwendung des privaten kryptographischen Schlüssels des ersten Sicherheitselements verschlüsselten Hash-Wert der Challenge. Eine Prüfung der Response umfasst beispielsweise ein entschlüsseln des verschlüsselten Hash-Werts unter Verwendung des öffentlichen kryptographischen Schlüssels des ersten Sicherheitselements. Der resultierende verschlüsselte Hash-Wert wird mit dem Hash-Wert der gesendeten Challenge verglichen. Stimmen beide überein ist die Prüfung und damit das Challenge-Response-Verfahren erfolgreich. Auf ein erfolgreiches Challenge-Response-Verfahren hin weiß das zweite Sicherheitselement und/oder das Sicherheitsapplet des zweiten Sicherheitselements, dass tatsächlich der berechtigte, d.h. erfolgreich authentifizierte, Nutzer das mobile Endgerät nutzt. Der Austausch von Challenge und/oder Response kann zudem zusätzlich kryptographisch gesichert erfolgen, etwa unter Verwendung eines verschlüsselten Kommunikationskanals, beispielsweise unter Verwendung einer Ende-zu-ende-Verschlüsselung.

Ausführungsformen können den Vorteil haben, dass ein sicheres Verfahren zum Authentifizieren eines Nutzers des mobilen Endgeräts gegenüber dem zweiten Sicherheitselement und/oder dem Sicherheitsapplet des zweiten Sicherheitselements und damit gegenüber dem Anwendungsprogram bereitgestellt wird. Somit kann sich der Nutzer sicherer Weise gegenüber dem Anwendungsprogram unter Vermittlung der beiden Sicherheitselemente authentisieren. Das Verfahren ermöglicht ein Authentifizieren des Nutzers des mobilen Endgerätes unter Verwendung zweier Sicherheitselemente gegenüber dem Anwendungsprogramm bzw. dem Sicherheitsapplet, welches dem Anwendungsprogramm zugeordnet ist. Die Verwendung zweier unabhängiger Sicherheitselemente erlaubt es neben dem ersten Sicherheitselement, welches dem Betriebssystem zugeordnet und beispielsweise unter Kontrolle des Herstellers des mobilen Endgeräts steht, ein weiteres zweites Sicherheitselement zu verwenden, welches unabhängig von dem ersten Sicherheitselement ist und beispielsweise nicht unter der Kontrolle des Geräteherstellers steht. Nach Ausführungsformen steht ein dem Anwendungsprogramm zugeordnete Sicherheitsapplet des zweiten Sicherheitselements beispielsweise unter der Kontrolle eines Herstellers des entsprechenden Anwendungsprogramms. Damit ermöglicht das Verfahren auch eine Authentisierung des Nutzers gegenüber dem Anwendungsprogramm unter Verwendung des mobilen Endgeräts bzw. der Authentifizierungsmittel des mobilen Endgeräts. Diese Authentifizierungsmittel umfassen beispielsweise eine Eingabevorrichtung und/oder einen Sensor, etwa einen biometrischen Sensor des mobilen Endgeräts, sowie das erste Sicherheitselement.

Ausführungsformen können den Vorteil haben, dass eine gleichzeitige Bindung des Nutzers an zwei voneinander unabhängige Sicherheitselemente mit einer gegenseitigen sicheren Verschränkung der beiden Sicherheitselemente auf einem mobilen Endgerät implementiert wird. Die Bindung des Nutzers wird beispielsweise dadurch implementiert, dass das erste Sicherheitselement Zugriff auf Referenzwerte für die ein oder mehreren Authentifizierungsfaktoren des Nutzers besitzt. Beispielsweise sind die entsprechenden Referenzwerte in einem dem ersten Sicherheitselement zugeordneten Speicherbereich des mobilen Endgeräts gespeichert. Beispielsweise umfasst das Sicherheitselement den entsprechenden Speicherbereich. Beispielsweise sind die Referenzwerte außerhalb des Sicherheitselements gespeichert. Beispielsweise sind die Referenzwerte in dem geschützten Speicherbereich des ersten Sicherheitselements gespeichert. Nach Ausführungsformen sind die Referenzwerte in einer kryptographisch gesicherten Form gespeichert, beispielsweise in verschlüsselter oder gehashter Form. Nach Ausführungsformen ist das erste Sicherheitselement unter Verwendung der entsprechenden Referenzwerte in der Lage den Nutzer anhand von mit dem Authentifizierungssensor erfassten Authentifizierungsfaktoren bzw. Authentifizierungsdaten zu authentifizieren. Dadurch kann eine Bindung des Nutzers an das erste Sicherheitselement implementiert werden. Das Ergebnis der Authentifizierung kann mittels des Challenge-Response-Verfahrens in kryptographisch gesicherter Weise an das zweite Sicherheitselement weitergeleitete werden, wodurch eine Bindung des Nutzers an das zweite Sicherheitselement und damit das Anwendungsprogramm implementiert werden kann. Im Ergebnis kann der Nutzer mithin gleichzeitig an beide Sicherheitselemente gebunden werden. Mittels des Challenge-Response-Verfahrens und den diesem zugrundeliegenden kryptographischen Mitteln der Sicherheitselemente kann somit eine gegenseitige sichere Verschränkung der beiden Sicherheitselemente auf dem Endgerät implementiert werden. Beispielsweise umfassen die kryptographischen Mittel ein asymmetrisches Schlüsselpaar des ersten Sicherheitselements, welches in dem ersten Sicherheitselement gespeichert ist, sowie den öffentlichen kryptographischen Schlüssel des entsprechenden Schlüsselpaars, der in dem zweiten Sicherheitselement gespeichert.

Eine Authentifizierung bezeichnet eine Verifizierung einer behaupteten Eigenschaft einer Entität, wie etwa einem Nutzer des mobilen Endgeräts. Im Zuge einer Authentifizierung wird beispielsweise ein entsprechender von dem Nutzer erbrachter Nachweis verifiziert. Die Entität führt durch ihren Beitrag zur Authentifizierung, d.h. durch Bereitstellen entsprechender Nachweise wie Authentifizierungsdaten bzw. Authentifizierungsfaktoren zur Prüfung, eine Authentisierung durch.

Eine Authentifizierung des Nutzers bezüglich der behaupteten Eigenschaft der Authentizität, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Der Nutzer kann sich auf verschiedene Weisen authentisieren. Er kann beispielsweise einen Nachweis einer Kenntnis, wie einer PIN oder einem Passwort, vorlegen, einen Nachweis eines Besitzes, wie etwa eines kryptographischen Schlüssels, eines Zertifikats oder eines elektronischen Geräts, und/oder einen Nachweis von Eigenschaften seiner Person selbst, wie biometrische Merkmale oder Verhaltensmerkmale. Beispielsweise wird der entsprechende Nachweis durch einen Authentifizierungssensor des mobilen Endgeräts in Form von Authentifizierungsdaten des Nutzers erfasst und von einem Sicherheitselement des mobilen Endgeräts mit einem oder mehreren hinterlegten Referenzwerten verglichen. Bei dem die erfassten Authentifizierungsdaten auswertenden Sicherheitselement handelt es sich beispielsweise um ein Sicherheitselement des Betriebssystems des mobilen Endgeräts. Im Falle einer ausreichenden Übereinstimmung zwischen den erfassten Authentifizierungsdaten und den hinterlegten Referenzwerten, bestätigt das Sicherheitselement eine erfolgreiche Authentifizierung des Nutzers. Beispielsweise umfasst eine Bestätigung der erfolgreichen Authentifizierung des Nutzers ein Ausführen eines Challenge-Response-Verfahrens durch das bestätigende Sicherheitselement.

Unter einem mobilen Endgerät wird ein mobiles tragbares Kommunikationsgerät, wie beispielsweise ein Smartphone, ein Tablet oder eine Smartwatch verstanden.

Unter einem Authentifizierungssensor wird ein Sensor zum Erfassen von Authentifizierungsdaten des Nutzers des mobilen Endgeräts verstanden. Die Authentifizierungsdaten können beispielsweise biometrische Daten des Nutzers umfassen. Der Authentifizierungssensor kann zum Erfassen biometrischer Daten des Nutzers konfiguriert sein, d.h. ein biometrischer Sensor. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Der Authentifizierungssensor kann beispielsweise eine Kamera des mobilen Endgeräts umfassen. Die Authentifizierungsdaten können beispielsweise ein Wissen des Nutzers umfassen, wie eine PIN oder Passwort. Der Authentifizierungssensor kann eine Eingabevorrichtung zur Eingabe von Authentifizierungsdaten, wie etwa eine PIN oder ein Passwort umfassen. Die Eingabevorrichtung kann beispielsweise eine Tastatur und/oder einen Touchscreen umfassen.

Ein Challenge-Response-Verfahren stellt ein sicheres Authentifizierungsverfahren einer ersten Instanz gegenüber einer zweiten Instanz auf Basis von Wissen dar. Beispielsweise wird das erste Sicherheitselement durch das zweite Sicherheitselement und/oder das Sicherheitsapplet des zweiten Sicherheitselements unter Verwendung eines Challenge-Response-Verfahrens authentifiziert. Gleichzeitig stellt die Response eine Bestätigung einer erfolgreichen Nutzerauthentifizierung dar, falls die Response nur unter der Voraussetzung einer erfolgreichen Nutzerauthentifizierung durch das erste Sicherheitselement erzeugt wird. Somit weiß das zweite Sicherheitselement bzw. das Sicherheitsapplet, im Falle eines erfolgreichen Challenge-Response-Verfahrens nicht nur, dass die Nutzerauthentifizierung bestätigt wurde, sondern dass diese durch das erste Sicherheitselement bestätigt wurde und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss. Durch das Bereitstellen der korrekten Antwort beweist die zweite Instanz, dass sie eine bestimmte Information kennt. Vorteil ist dabei, dass die bestimmte Information nicht mit übertragen wird und somit durch den Datenaustausch in Zuge des Challenge-Response-Verfahrens auch nicht kompromittiert werden kann. Vielmehr kann die bestimmte Information durch die zweite Instanz als ein ihr, ggf. nur ihr, bekanntes Geheimnis verwahrt werden.

Ein Challenge-Response-Verfahren kann auf einem asymmetrischen Kryptosystem beruhen und dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, z.B. eines Nonce, verwendet. Bei der entsprechenden kryptographischen Transformation kann es sich beispielsweise um ein digitales Signieren handeln. Die erste Instanz kann unter Verwendung eines dem privaten kryptographischen Schlüssel zugehörigen öffentlichen kryptographischen Schlüssels anhand der Response prüfen, ob die zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Beispielsweise erzeugt die erste Instanz ein Zufallswert, etwa ein Nonce, und sendet diese an die zweite Instanz. Die zweite Instanz verwendet das ihr bekannte Geheimnis für eine kryptographische Transformation des Nonce und sendet das Resultat als Response zum Zwecke einer Authentifizierung der zweiten Instanz an die erste Instanz. Handelt es sich bei dem Geheimnis um einen privaten kryptographischen Schlüssel der zweiten Instanz, kann unter dessen Verwendung das Nonce signiert werden. Im Zuge des Signierens wird beispielsweise ein Hashwert des Nonce berechnet und mit dem privaten kryptographischen Schlüssel der zweiten Instanz verschlüsselt. Die erste Instanz, welche sowohl das Nonce als auch einen zu dem privaten kryptographischen Schlüssel der zweiten Instanz gehörenden öffentlichen kryptographischen Schlüssel der zweiten Instanz kennt, kann eine inverse Berechnung ausführen, d.h. das signierte Nonce unter Verwendung des öffentlichen kryptographischen Schlüssels der zweiten Instanz entschlüsseln. Das Ergebnis der Entschlüsselung ist beispielsweise ein Hashwert des Nonce. Dieser entschlüsselte Hashwert kann mit dem Hashwert des gesendeten Nonce verglichen werden. Hierzu wird beispielsweise eine Hash-funktion auf das entsprechende bei der ersten Instanz hinterlegte Nonce angewendet. Stimmt der entschlüsselte Hashwert mit dem Hashwert des gesendeten Nonce überein, ist das Challenge-Response-Verfahren erfolgreich und die zweite Instanz erfolgreich authentifiziert.

Im vorliegenden Fall handelt es sich bei der zweiten Instanz um das zweite Sicherheitselement, welches dem Anwendungsprogramm zugeordnet ist, und bei der zweiten Instanz um das erste Sicherheitselement, welches dem Betriebssystem des mobilen Endgeräts zugeordnet ist.

Unter einem Sicherheitselement, auch "Secure Element" oder "SE" genannt, wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Bei den kryptographischen Schlüsseln kann es sich insbesondere um kryptographische Schlüssel asymmetrischer Schlüsselpaare handeln. Ein solcher Key-Store bzw. Sicherheitselement kann auch als Teil des Hauptprozessors implementiert sein, beispielsweise in einer TEE (Trusted Excecution Environment). Beispielsweise kann das erste Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Ein Anwendungsprogramm, auch Applikation oder kurz App genannt, bezeichnet ein Computerprogramm, welches nicht systemtechnische Funktionalität bereitstellt, unterstützt und/oder deren Bearbeitung ermöglicht.

Unter einem Applet wird ein Computerprogramm verstanden, welches nicht als eigenständige Anwendungsprogramm betrieben wird. Der Begriff "Applet" setzt sich aus den englischen Worten "Application", d.h. Anwendung bzw. Anwendungsprogramm und "Snippet", d.h. Schnipsel, zusammen.

Ein Betriebssystem bezeichnet ein Computerprogramm oder eine Zusammenstellung von Computerprogrammen, welche systemtechnische Funktionalitäten bereitstellen, unterstützen und/oder deren Bearbeitung ermöglichen. Durch ein Betriebssystem werden Systemressourcen zur Verfügung gestellt. Systemressourcen bezeichnen Systemelemente bzw. Hardwarekomponenten eines Computers, die von Prozessen zur korrekten Ausführung benötigt werden.

Unter einer "Kommunikationsschnittstelle" wird hier beispielsweise eine Schnittstelle verstanden, über die Daten empfangen und gesendet werden können, wobei die Kommunikationsschnittstelle kontaktbehaftet oder kontaktlos konfiguriert sein kann.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Eine kontaktlose Kommunikation ist beispielsweise mittels Near Field Communication (NFC) möglich. Hierbei handelt es sich beispielsweise um eine auf der RFID-Technologie basierende Kommunikation zum kontaktlosen Austausch von Daten per elektromagnetischer Induktion mittels loser gekoppelter Spulen über kurze Strecken. NFC kann beispielsweise gemäß einer der Normen ISO 14443, 18092, 21481, ECMA 340, 352, 356, 362 bzw. ETSI TS 102 190 implementiert sein.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" wird hier insbesondere ein nichtflüchtiger Speicher verstanden. Unter einem "nichtflüchtigen Speicher" wird hier beispielsweise ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Eine "Public-Key-Infrastructure" (PKI) stellt ein System dar zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public-Key-Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Beispielsweise kann das Zertifikat dem Standard X.509 oder einem anderen Standard entsprechen. Beispielsweise kann das Zertifikat ein Card Verifiable Certificate (CVC) Zertifikat sein, bei welchem es sich um ein Public-Key-Zertifikat, das in einem kompakten Format gespeichert wird.

Digitale Zertifikate sind bei der Absicherung elektronischer Kommunikation durch asymmetrische kryptographische Verfahren ein bewährtes Mittel, um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt, um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln und digitale mit dem privaten Schlüssel erstellte Signaturen zu prüfen. Ein privater Schlüssel ermöglicht es seinem Inhaber, mit dem öffentlichen Schlüssel verschlüsselte Daten zu entschlüsseln oder digitale Signaturen zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten ein weiterer Datenwert, welcher als "Signatur" bezeichnet wird, berechnet wird. Bei einer Signatur kann es sich zum Beispiel um eine mit einem privaten kryptographischen Schlüssel verschlüsselten Hashwert der Ausgangsdaten handeln.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Ausführungsformen können den Vorteil haben, dass sie eine sichere Verwaltung digitaler Identitäten unter Verwendung eines mobilen Geräts ermöglichen. Hierzu kann das Anwendungsprogramm als ID-Anwendungsprogramm zum Verwalten von digitalen Identitäten bzw. von zu digitalen Identitäten gehörenden bzw. digitalen Identitäten definierenden Identitätsattributen. Es wird beispielsweise ein sicheres Anwendungsprogramm bzw. Applikation zum Verwalten digitaler Identitäten bereitgestellt, welches im Folgenden als ID-Anwendungsprogramm bezeichnet wird.

Dem ID-Anwendungsprogramm, welches auf dem mobilen Endgerät installiert und ausgeführt wird, ist das zweite Sicherheitselement zugeordnet. Beispielsweise ist dem ID-Anwendungsprogramm ein Sicherheitsapplet zugeordnet, welches auf dem zweiten Sicherheitselement des mobilen Endgeräts installiert ist und dort ausgeführt wird. Das mobile Endgerät mit den von dem ID-Anwendungsprogramm verwalteten digitalen Identitäten kann verwendet werden zum Identifizieren und Authentifizieren, zum Übertragen von Identitätsdaten sowie zur Unterstützung von Absichtserklärungen im mobilen Kontext.

Nach Ausführungsformen kann die digitale Identität eine offiziell anerkannte Identität, wie zum Beispiel eine auf Grundlage eines offiziellen Ausweisdokuments, etwa eines Personalausweises oder Reisepasses, erstellte digitale Identität umfassen.

Die digitale Identität eines Nutzers ist eindeutig, d.h. einzigartig und unverwechselbar. Sie wird auf der Grundlage von Merkmalen, sog. Identitätsattributen, definiert. Eine digitale Identität umfasst beispielsweise personenbezogenen Daten. Personenbezogene Daten bezeichnen Daten, welche eine Identifikation einer Person ermöglichen oder einer Person zuordenbar sind, auf welche die personenbezogenen Daten bezogen sind.

Ein Nutzer kann über eine Mehrzahl von unterschiedlichen, anwendungsspezifischen digitalen Identitäten verfügen. Diese digitalen Identitäten können unterschiedlichen Sicherheitsanforderungen entsprechen.

Nach Ausführungsformen kann eine auf dem mobilen Endgerät gespeicherte und von dem ID-Anwendungsprogramm bereitgestellte bzw. verwaltete digitale Identität ohne zusätzliche Hardware neben dem mobilen Endgerät zur Identifizierung und Authentifizierung des Nutzers des mobilen tragbaren Geräts verwendet werden.

Identitätsattribute werden beispielsweise von Service-Providern bzw. Dienstanbietern für Online-Dienste nachgefragt. Nach Ausführungsformen erfolgt eine Übertragung der von einem Dienstanbieter für seinen Online-Dienst benötigten Identitätsattribute verschlüsselt und authentisch. Beispielsweise wird unter Verwendung von Berechtigungszertifikaten geregelt, wer auf welche Identitätsattribute zugreifen darf bzw. eine Leseberechtigung für diese besitzt. Beispielsweise werden die benötigten Identitätsattribute von einem dazu mittels Berechtigungszertifikat berechtigten ID-Provider ausgelesen und dem anfragenden Dienstanbieter zur Verfügung gestellt. Nach Ausführungsformen stellt der ID-Provider dem anfragenden Dienstanbieter nur eine Bestätigung des oder der angefragten Identitätsattribute zur Verfügung.

Eine Zustimmung des Nutzers zur Verwendung der Identitätsattribute und/oder eine Nutzerauthentifizierung erfolgt beispielsweise durch eine Authentifizierung, d.h. unter Prüfung ein oder mehrerer Authentifizierungsfaktoren, wie etwa Passwort, PIN, oder einem biometrischen Merkmal, beispielsweise Fingerabdruck oder Gesichtserkennung.

Nach Ausführungsformen umfasst das Challenge-Response-Verfahren ein Erzeugen einer Response und ein Validieren der Response. Das Erzeugen der Response umfasst ein Signieren der Challenge und das Validieren der Response umfasst eine Signaturprüfung.

Ausführungsformen können den Vorteil haben, dass durch das Signieren Wissen des ersten Sicherheitselements nachgewiesen werden kann, etwa in Form des zum Signieren verwendeten Signaturschlüssels, d.h. eines privaten kryptographischen Schlüssels, ohne dass das entsprechende Wissen zum Nachweis selbst übertragen werden muss. Da beispielsweise nur das erste Sicherheitselement Zugriff auf den zum Signieren verwendeten privaten kryptographischen Schlüssel besitzt, kann nur dieses die Signatur erstellen, welche mit dem zugehörigen öffentlichen kryptographischen Schlüssel erfolgreich auf ihre Validität geprüft werden kann. Ist die Signaturprüfung mit dem entsprechenden öffentlichen kryptographischen Schlüssel erfolgreich, ist die Herkunft der Signatur nachgewiesen. Mithin kann das erste Sicherheitselement durch das Challenge-Response-Verfahren in effizienter, effektiver und sicherer Weise durch das zweite Sicherheitselement und/oder das Sicherheitsapplet des zweiten Sicherheitselements authentifiziert werden. Da die Voraussetzung für ein Senden der Response eine erfolgreiche Authentifizierung des Nutzers durch das erste Sicherheitselement ist, wird durch das erfolgreiche Challenge-Response-Verfahren zudem die erfolgreiche Nutzerauthentifizierung bestätigt und belegt. Mithin erfolgt durch das Challenge-Response-Verfahren eine Nutzerauthentifizierung gegenüber dem zweiten Sicherheitselement und/oder dem Sicherheitsapplet des zweiten Sicherheitselements unter Verwendung des ersten Sicherheitselements.

Wird für die Signatur ein kryptographischer Schlüssel ausreichender Länge verwendet kann dies den Vorteil haben, dass dadurch die Entropie und mithin die Sicherheit des Authentifizierungsverfahrens erhöht werden kann.

Nach Ausführungsform wird der öffentliche kryptographische Schlüssel des ersten Sicherheitselements dem zweiten Sicherheitselement als Bestandteil eines Zertifikats bereitgestellt. Nach Ausführungsformen umfasst das zweite Sicherheitselement ein Zertifikat, welches den öffentlichen kryptographischen Schlüssel des asymmetrischen Schlüsselpaars des ersten Sicherheitselements umfasst.

Nach Ausführungsformen handelt es sich bei dem Zertifikat um ein Zertifikat einer Public Key Infrastructure (PKI).

Nach Ausführungsformen umfasst das Endgerät das zweite Sicherheitselement.

Nach Ausführungsformen wird das zweite Sicherheitselement von einem externen Server bereitgestellt wird.

Ausführungsformen können den Vorteil haben, dass eine Möglichkeit zur Verwendung eines entfernten zweiten Sicherheitselements, d.h. eine Remote Security Elements, auf einem externen Server zum Bereitstellen kryptographischer Funktionen für ein auf einem mobilen Endgerät installiertes Anwendungsprogramm bereitgestellt werden kann. Ein entsprechendes Sicherheitselement umfasst beispielsweise kryptographische Schlüssel zum Ausführen kryptographischer Protokolle, wie beispielsweise Verschlüsselungen, Entschlüsselungen und/oder Signaturen. Ein entsprechendes Sicherheitselement muss somit nicht auf dem mobilen Endgerät selbst implementiert sein, sondern kann durch einen Server, welcher mit dem mobilen Endgerät über ein Netzwerk kommuniziert, für das mobile Endgerät bereitgestellt werden.

Beispielsweise kann das entfernte Sicherheitselement für eine verschlüsselte Kommunikation zwischen den auf dem mobilen Endgerät installierten Anwendungsprogramm und dem auslesenden Computersystem verwendet werden. Beispielsweise sind auf dem mobilen Endgerät ein oder mehrere elektronische Identitäten gespeichert. Die elektronischen Identitäten umfassen jeweils ein oder mehrere Identitätsattribute. Die entsprechenden Identitätsattribute sind beispielsweise in verschlüsselter Form auf den mobilen Endgeräten gespeichert. Beispielsweise verfügt das mobile Endgerät nicht über einen oder mehrere kryptographische Schlüssel zum Entschlüsseln der verschlüsselten Identitätsattribute. Beispielsweise sind die Identitätsattribute verschiedener elektronischer Identitäten mit verschiedenen kryptographischen Schlüsseln verschlüsselt. Der oder die kryptographischen Schlüssel zum Entschlüsseln der Identitätsattribute sind beispielsweise in dem entfernten Sicherheitselement gespeichert. Somit besitzt das mobile Endgerät und damit der Nutzer des mobilen Endgeräts die Verfügungshoheit über die Identitätsattribute, während deren kryptographische Sicherung durch das entfernte Sicherheitselement erfolgt. Somit kann einerseits die kryptographische Sicherung der Identitätsattribute auf einen entfernten Server ausgelagert werden, während der Nutzer nach wie vor die Verfügungshoheit über die Identitätsattribute behält, d.h. der Nutzer kann entscheiden, welche Identitätsattribute welchem Computersystem zum Auslesen zur Verfügung gestellt werden. Ohne Einbeziehung des mobilen Endgeräts und damit des Nutzers des mobilen Endgeräts können keine Identitätsattribute zur Verfügung gestellt werden.

Sollen Identitätsattribute ausgelesen werden, so empfängt der Server die entsprechenden auszulesenden Identitätsattribute von dem auf dem mobilen Endgerät installierten Anwendungsprogramm, welches die zugehörige elektronische Identität verwaltet. Das entfernte zweite Sicherheitselement des Servers entschlüsselt die auszulesenden Identitätsattribute unter Verwendung eines der elektronischen Identität zugeordneten kryptographischen Schlüssels. Bei dem kryptographischen Schlüssel handelt es sich beispielsweise um einen symmetrischen kryptographischen Schlüssel, welcher in dem entfernten Sicherheitselement gespeichert ist. Beispielsweise ist das Sicherheitsmodul in Form eines Hardwaresicherheitsmoduls (HSM) des Servers implementiert. Das entsprechende Sicherheitselement kann beispielsweise ein dem entsprechenden Anwendungsprogramm zugeordnetes Sicherheitsapplet umfassen. In einer der elektronischen Identität zugeordneten Sub-Security-Domain des Sicherheitselements ist beispielsweise der entsprechende kryptographische Schlüssel zur Entschlüsselung der Identitätsattribute gespeichert. Die entschlüsselten auszulesenden Identitätsattribute werden durch das zweite Sicherheitselement unter Verwendung eines ephemeren symmetrischen Schlüssels verschlüsselt. Der entsprechende ephemere symmetrische kryptographische Schlüssel wurde beispielsweise im Zuge eines Aufbaus eines kryptographisch gesicherten Kommunikationskanals zwischen dem entfernten zweiten Sicherheitselement und dem auslesenden Computersystem erzeugt. Der entsprechende ephemere symmetrische kryptographische Schlüssel ist beispielsweise zur Sicherung der Kommunikation mit dem auslesenden Computersystem in dem entfernten zweiten Sicherheitselement gespeichert. Die Kommunikation zwischen dem entfernten zweiten Sicherheitselement bzw. dem Server einerseits und dem auslesenden Computersystem andererseits erfolgt beispielsweise über das Anwendungsprogramm bzw. das mobile Endgerät. Der Server sendet unter Verwendung des ephemeren symmetrischen Schlüssels verschlüsselte Identitätsattribute an das auslesende Computersystem.

Ausführungsformen können den Vorteil haben, dass eine hardwarebasierte Sicherung elektronischer Identitäten auf vom mobilen Endgerät unabhängiger Hardware, d.h. unter Verwendung des entfernten zweiten Sicherheitselements ("remote secure element"), unabhängig von der Hard- und Softwareausstattung des mobilen Endgeräts selbst bereitgestellt werden kann. Beispielsweise können Integrität, Authentizität, Zurechenbarkeit der elektronischen Identitäten, etwa durch eine Authentisierung unter Verwendung des entfernten Sicherheitselements bereitgestellt werden. Ferner kann eine dezentrale Speicherung der Identitätsdaten auf dem mobilen Endgerät ermöglicht werden, bei welcher der Nutzer des mobilen Endgeräts die Verfügungshoheit über die Identitätsattribute seiner elektronischen Identitäten behält. Ferner kann eine sichere Verifikation der elektronischen Identitäten auf dem mobilen Endgerät mittels geeigneter kryptographischer Verfahren sichergestellt werden. Schließlich kann eine variable und austauschbare Nutzung von Authentisierungsverfahren ermöglicht werden.

Nach Ausführungsformen umfasst das zweites Sicherheitselement ein dem Anwendungsprogramm zugeordneten Sicherheitsapplet. Das Sicherheitsapplet umfasst die kryptographische Mittel zum Ausführen eines Challenge-Response-Verfahrens. Das Bestätigen der erfolgreichen Authentifizierung des Nutzers gegenüber dem Anwendungsprogramm erfolgt durch das Sicherheitsapplet.

Nach Ausführungsformen umfasst das Verfahren ferner ein Bereitstellen des asymmetrischen Schlüsselpaars. Der asymmetrische Schlüsselpaar kann beispielsweise durch das erste Sicherheitselement erzeugt werden.

Nach Ausführungsformen umfasst das Bereitstellen des asymmetrischen Schlüsselpaars des ersten Sicherheitselements:
- Erzeugen des asymmetrischen Schlüsselpaars durch das erste Sicherheitselement,
- Übertragen des öffentlichen kryptographischen Schlüssels des asymmetrischen Schlüsselpaars des ersten Sicherheitselements an das zweite Sicherheitselement.

Ausführungsformen können den Vorteil haben, dass der private kryptographische Schlüssel des durch das erste Sicherheitselement erzeugten symmetrischen Schlüsselpaars das erste Sicherheitselement nicht verlässt. in sicherer Weise mit dem Sicherheitsapplet geteilt werden kann. Damit kann sichergestellt werden, dass nur das erste Sicherheitselement in der Lage ist den privaten kryptographischen Schlüssel zu nutzen.

Nach Ausführungsformen sendet das erste Sicherheitselement den öffentlichen kryptographischen Schlüssel des asymmetrischen Schlüsselpaars des ersten Sicherheitselements direkt an das zweite Sicherheitselement.

Nach Ausführungsformen umfasst das mobile Endgerät eine Kommunikationsschnittstelle zur Kommunikation über ein Netzwerk. Das Übertragen des öffentlichen kryptographischen Schlüssels des asymmetrischen Schlüsselpaars des ersten Sicherheitselements umfasst:
- Senden des öffentlichen kryptographischen Schlüssels des asymmetrischen Schlüsselpaars des ersten Sicherheitselements an das Anwendungsprogramm,
- Weiterleiten des öffentlichen kryptographischen Schlüssels des asymmetrischen Schlüsselpaars des ersten Sicherheitselements von dem Anwendungsprogramm unter Verwendung der Kommunikationsschnittstelle über das Netzwerk an einen externen Provisionierungsserver, welcher über eine Schreibberechtigung zum Schreiben in einen Speicherbereich des zweiten Sicherheitselements verfügt,
- Validieren der Schreibberechtigung des Provisionierungsservers zum Schreiben in den Speicherbereich des zweiten Sicherheitselements,
- auf ein erfolgreiches Validieren der Schreibberechtigung des Provisionierungsservers, Gewähren eines Schreibzugriffs des externen Provisionierungsservers über die Kommunikationsschnittstelle auf den Speicherbereich des zweiten Sicherheitselements,
- Schreiben des öffentlichen kryptographischen Schlüssels des asymmetrischen Schlüsselpaars des ersten Sicherheitselements in den Speicherbereich des zweiten Sicherheitselements.

Ausführungsformen können den Vorteil haben, dass die Sicherheit des zweiten Sicherheitselements bzw. des Sicherheitsapplets des zweiten Sicherheitselements erhöht werden kann. Externe kryptographische Daten, wie der öffentliche kryptographische Schlüssel des ersten Sicherheitselements, können beispielsweise nur von einer externen Instanz in das zweite Sicherheitselement eingebracht werden, welche eine Berechtigung dazu nachweisen kann, beispielsweise unter Verwendung eines Berechtigungszertifikats. Bei der externen Instanz handelt es sich in einem Ausführungsbeispiel beispielsweise um den Provisionierungsserver. Beispielsweise steht die externe Instanz unter der Kontrolle des Entwicklers/Herstellers des Anwendungsprogramms und/oder des Sicherheitsapplets. Beispielsweise handelte es sich bei der externen Instanz um eine von dem Entwickler/Hersteller des Anwendungsprogramm unabhängige vertrauenswürdige dritte Instanz, welche von dem Entwickler/Hersteller des Anwendungsprogramm autorisiert wurde, externes Schlüsselmaterial und/oder externe Schlüssel in das zweite Sicherheitselement und/oder das Sicherheitsapplet einzubringen, beispielsweise im Auftrag des Entwicklers/Herstellers des Anwendungsprogramms und/oder unter Zustimmung des Entwicklers/Herstellers des Anwendungsprogramms. Um externes Schlüsselmaterial und/oder externe Schlüssel in das Sicherheitsapplet einbringen zu können reicht ein Besitz und/oder ein Zugriff auf das mobile Endgerät beispielsweise nicht aus. Vielmehr wird zusätzlich Kontrolle über eine von dem mobilen Endgerät unabhängige externe Instanz benötigt.

Nach Ausführungsformen erfolgt das Bereitstellen des asymmetrischen Schlüsselpaars des ersten Sicherheitselements im Zuge eines Initialisierens des ersten Sicherheitselements durch einen externen Initialisierungsserver, wobei der Initialisierungsserver eine Schreibberechtigung zum Initialisieren des ersten Sicherheitselements umfasst,
wobei das Initialisieren umfasst:
- Erzeugen des asymmetrischen Schlüsselpaars des ersten Sicherheitselements durch das erste Sicherheitselement,
- Validieren der Schreibberechtigung des Initialisierungsservers zum Initialisieren des zweiten Sicherheitselements,
- auf ein erfolgreiches Validieren der Schreibberechtigung des Initialisierungsservers, Gewähren eines Schreibzugriffs des externen Initialisierungsservers über die Kommunikationsschnittstelle auf das zweite Sicherheitselement,
- Initialisieren des ersten Sicherheitselements,
- Schreiben des asymmetrischen Schlüsselpaars des ersten Sicherheitselements in den initialisierten Speicherbereich.

Ausführungsformen können den Vorteil haben, dass die Sicherheit des ersten Sicherheitselements erhöht werden kann, da es beispielsweise nur zwei Wege gibt kryptographische Schlüsselmaterial in das erste Sicherheitselement einzubringen: Entweder werden die entsprechenden kryptographischen Schlüssel von dem ersten Sicherheitselement selbst erzeugt oder sie werden von einer externen Instanz eingebracht, welche eine Berechtigung dazu nachweisen kann, beispielsweise unter Verwendung eines Berechtigungszertifikats. Bei der entsprechenden externen Instanz handelt es sich beispielsweise um einen Initialisierungsserver, welcher das entsprechende Schlüsselmaterial, etwa ein asymmetrischen Schlüsselpaar, im Zuge einer Initialisierung des ersten Sicherheitselements in dieses einbringt. Beispielsweise stehet die externe Instanz unter der Kontrolle des Geräteherstellers des mobilen Endgeräts. Beispielsweise handelte es sich bei der externen Instanz um eine von dem Gerätehersteller des mobilen Endgeräts unabhängige vertrauenswürdige dritte Instanz, welche von dem Entwickler/Hersteller des Anwendungsprogramms autorisiert wurde externes Schlüsselmaterial und/oder externe Schlüssel in das erste Sicherheitselement einzubringen, beispielsweise im Auftrag des Geräteherstellers und/oder unter Zustimmung des Geräteherstellers. Um externes Schlüsselmaterial und/oder externe Schlüssel in das erste Sicherheitselement einbringen zu können reicht ein Besitz des mobilen Endgeräts und/oder ein Zugriff auf das mobile Endgerät beispielsweise nicht aus. Vielmehr wird zusätzlich Kontrolle über eine von dem mobilen Endgerät unabhängige externe Instanz benötigt.

Beispielsweise wird im Zuge der Herstellung des asymmetrischen Schlüsselpaars auch ein Zertifikat, etwa ein PKI-Zertifikat mit bzw. für den öffentlichen kryptographischen Schlüssel des ersten Sicherheitselements erzeugt. Beispielsweise wird der öffentlichen kryptographischen Schlüssel des ersten Sicherheitselements von dem Initialisierungsserver oder ersten Sicherheitselement einem Provisionierungsserver zum Einbringen in das zweite Sicherheitselement zur Verfügung gestellt.

Nach Ausführungsformen umfasst das Verfahren ferner:
- Senden des öffentlichen kryptographischen Schlüssels des asymmetrischen Schlüsselpaars des ersten Sicherheitselements von dem externen Initialisierungsserver an den externen Provisionierungsserver, welcher über eine Schreibberechtigung zum Schreiben in einen Speicherbereich des zweiten Sicherheitselements verfügt,
- Validieren der Schreibberechtigung des Provisionierungsservers zum Schreiben in den Speicherbereich des zweiten Sicherheitselements,
- auf ein erfolgreiches Validieren der Schreibberechtigung des Provisionierungsservers, Gewähren eines Schreibzugriffs des externen Provisionierungsservers über die Kommunikationsschnittstelle auf den Speicherbereich des zweiten Sicherheitselements,
- Schreiben des öffentlichen kryptographischen Schlüssels des asymmetrischen Schlüsselpaars des ersten Sicherheitselements in den Speicherbereich des zweiten Sicherheitselements.

Nach Ausführungsformen umfasst das Verfahren ferner ein Initialisieren des Sicherheitsapplets in dem zweiten Sicherheitselement durch einen externen Initialisierungsserver. Der Initialisierungsserver umfasst eine Schreibberechtigung zum Initialisieren des Sicherheitsapplets in dem zweiten Sicherheitselement. Das Initialisieren umfasst:
- Validieren der Schreibberechtigung des Initialisierungsservers zum Initialisieren des Sicherheitsapplets in dem zweiten Sicherheitselement,
- auf ein erfolgreiches Validieren der Schreibberechtigung des Initialisierungsservers, Gewähren eines Schreibzugriffs des externen Initialisierungsservers über die Kommunikationsschnittstelle auf das zweite Sicherheitselement,
- Initialisieren des dem Sicherheitsapplet zugeordneten Speicherbereich des zweiten Sicherheitselements,
- Schreiben eines asymmetrischen Schlüsselpaars des Sicherheitsapplets in den initialisierten Speicherbereich.

Ausführungsformen können den Vorteil haben, dass die Sicherheit des zweiten Sicherheitselements bzw. des Sicherheitsapplets des zweiten Sicherheitselements erhöht werden kann, da es beispielsweise nur zwei Wege gibt kryptographische Schlüssel in das Sicherheitsapplet einzubringen: Entweder werden die entsprechenden kryptographischen Schlüssel von dem Sicherheitsapplet selbst erzeugt oder sie werden von einer externen Instanz eingebracht, welche eine Berechtigung dazu nachweisen kann, beispielsweise unter Verwendung eines Berechtigungszertifikats. Beispielsweise steht die externe Instanz unter der Kontrolle des Entwicklers/Herstellers des Anwendungsprogramms und des Sicherheitsapplets. Beispielsweise handelte es sich bei der externen Instanz um eine von dem Entwickler/Hersteller des Anwendungsprogramms unabhängige vertrauenswürdige dritte Instanz, welche von dem Entwickler/Hersteller des Anwendungsprogramms autorisiert wurde externes Schlüsselmaterial und/oder externe Schlüssel in das Sicherheitsapplet einzubringen, beispielsweise im Auftrag des Entwicklers/Herstellers des Anwendungsprogramms und/oder unter Zustimmung des Entwicklers/Herstellers des Anwendungsprogramms. Um externes Schlüsselmaterial und/oder externe Schlüssel in das Sicherheitsapplet einbringen zu können reicht ein Besitz des mobilen Endgeräts und/oder ein Zugriff auf das mobile Endgerät beispielsweise nicht aus. Vielmehr wird zusätzlich Kontrolle über eine von dem mobilen Endgerät unabhängige externe Instanz benötigt. Bei der externen Instanz handelt es sich in einem Ausführungsbeispiel beispielsweise um den Initialisierungsserver. Der Initialisierungsserver kann von dem Provisionierungsserver abhängig, mit diesem identisch und/oder von diesem unabhängig sein. Bei dem Initialisierungsserver des zweiten Sicherheitselements und/oder des Sicherheitsapplets des zweiten Sicherheitselements handelt es sich beispielsweise um einen von dem Initialisierungsserver des ersten Sicherheitselement verschiedenen Initialisierungsserver. Beispielsweise handelt es sich bei dem Initialisierungsserver des zweiten Sicherheitselements und/oder des Sicherheitsapplets des zweiten Sicherheitselements um einen Initialisierungsserver des Entwicklers/Herstellers des Anwendungsprogramms oder einer von dem Entwickler/Hersteller des Anwendungsprogramms autorisierten Instanz, während es sich bei dem Initialisierungsserver des ersten Sicherheitselements um einen Initialisierungsserver des Geräteherstellers handelt.

Ausführungsformen können den Vorteil haben, dass der durch das erste Sicherheitselement oder für das erste Sicherheitselement erzeugte öffentliche kryptographische Schlüssel des asymmetrischen Schlüsselpaars des ersten Sicherheitselements in sicherer Weise mit dem zweiten Sicherheitselement geteilt werden kann.

Nach Ausführungsformen erfolgt eine Kommunikation im Zuge des Challenge-Response-Verfahrens zwischen dem ersten Sicherheitselement und dem zweiten Sicherheitselement, beispielsweise dem Sicherheitsapplet, über das Anwendungsprogramm.

Ausführungsformen können den Vorteil haben, dass das Anwendungsprogramm das Challenge-Response-Verfahrens selbst nutzen kann. Nach Ausführungsformen kann sich das Anwendungsprogramm dadurch gegenüber dem zweiten Sicherheitselement und/oder Sicherheitsapplet authentifiziert. Beispielsweise sendet das zweiten Sicherheitselement und/oder Sicherheitsapplet die Challenge an das Anwendungsprogramm, welches im Zuge des Challenge-Response-Verfahrens mit einer von dem ersten Sicherheitselement bereitgestellten Response antwortet. Diese Response dient als Nachweis eines Besitzes. Beispielsweise umfasst die Response die mit dem privaten kryptographischen Schlüssel des ersten Sicherheitselements verschlüsselte Challenge und weist mithin den Besitz des entsprechenden privaten kryptographischen Schlüssels nach. Aus Sicht des zweiten Sicherheitselements und/oder Sicherheitsapplets kann sich das Anwendungsprogramm durch Verwendung der Response gegenüber dem zweiten Sicherheitselement und/oder Sicherheitsapplet authentisieren bzw. wird durch das zweite Sicherheitselement und/oder Sicherheitsapplet authentifiziert. Der private kryptographische Schlüssel des ersten Sicherheitselements stellt mithin einen Authentisierungsschlüssel zum Authentisieren des Anwendungsprogramms. Der öffentliche kryptographische Schlüssel des ersten Sicherheitselements stellt mithin einen Authentifizierungsschlüssel zum Authentifizieren des Anwendungsprogramms dar. Beispielsweise ist der private kryptographische Schlüssel in einem geschützten Speicherbereich des ersten Sicherheitselements gespeichert. Der Zugriff auf den privaten kryptographischen Schlüssel in dem geschützten Speicherbereich des ersten Sicherheitselements setzt beispielsweise eine erfolgreiche Nutzerauthentifizierung gegenüber dem ersten Sicherheitselement unter Verwendung des Authentifizierungssensors voraus. Der Zugriff wird mithin durch die Nutzerauthentifizierung geschützt. Nach erfolgreicher Nutzerauthentifizierung durch das erste Sicherheitselement und erfolgreicher Authentifizierung des Anwendungsprogramms unter Verwendung der von dem ersten Sicherheitselement bereitgestellten Response kann das zweite Sicherheitselement genutzt und/oder das Sicherheitsapplet des zweiten Sicherheitselements von dem Anwendungsprogramm und/oder über das Anwendungsprogramm aufgerufen werden. Beispielsweise kann das zweite Sicherheitselement und/oder das Sicherheitsapplet des zweiten Sicherheitselements durch einen externen Server über ein Client-Modul des Anwendungsprogramms aufgerufen werden. Das zweite Sicherheitselement kann dabei beispielsweise auf dem mobilen Endgerät oder einem weiteren externen Server bereitgestellt werden. Nach Ausführungsformen ist Voraussetzung für ein Aufrufen des zweiten Sicherheitselements und/oder des Sicherheitsapplets des zweiten Sicherheitselements durch den externen Server ein erfolgreicher Berechtigungsnachweis des Servers zum Aufrufen gegenüber dem Anwendungsprogramm und/oder gegenüber dem zweiten Sicherheitselement bzw. dem Sicherheitsapplet des zweiten Sicherheitselements. Ein entsprechender Berechtigungsnachweis kann beispielsweise eine Verwendung eines Berechtigungszertifikats durch den externen Server umfassen, welches die Berechtigung des externen Servers zum Zugriff auf das zweite Sicherheitselement und/oder das Sicherheitsapplet des zweiten Sicherheitselements nachweist.

Nach Ausführungsformen ist ein Zugriff auf das zweite Sicherheitselement und/oder das Sicherheitsapplet des zweiten Sicherheitselements, welches dem Anwendungsprogramm zugeordnet ist, nur über das Anwendungsprogramm möglich. Ausführungsformen können den Vorteil haben, dass somit die Sicherheit des zweiten Sicherheitselements und/oder des Sicherheitsapplets des zweiten Sicherheitselements erhöht und dieses vor unberechtigten Zugriffen geschützt werden kann.

Nach Ausführungsformen umfasst das Challenge-Response-Verfahren:
- Senden der Challenge des zweiten Sicherheitselements, beispielsweise des Sicherheitsapplets, an das Anwendungsprogramm,
- Weiterleiten der Challenge von dem Anwendungsprogramm an das erste Sicherheitselement,
- auf eine erfolgreiche Authentifizierung des Nutzers durch das Betriebssystem hin, Erzeugen der Response durch das erste Sicherheitselement,
- Senden der Response von dem ersten Sicherheitselement an das Anwendungsprogramm,
- Weiterleiten der Response von dem Anwendungsprogramm an das zweite Sicherheitselement, beispielsweise das Sicherheitsapplet,
- Validieren der entschlüsselten Response durch das Sicherheitsapplet.

Ausführungsformen können den Vorteil haben, dass das Anwendungsprogramm das Challenge-Response-Verfahrens selbst nutzen kann, beispielsweise zu Authentifizierung gegenüber dem zweiten Sicherheitselement und/oder dem Sicherheitsapplet des zweiten Sicherheitselements. Ist der Zugriff auf das zweite Sicherheitselement und/oder das Sicherheitsapplet des zweiten Sicherheitselements nur über das Anwendungsprogramm möglich, kann ferner die Sicherheit des zweiten Sicherheitselements und/oder des Sicherheitsapplets des zweiten Sicherheitselements erhöht und dieses vor unberechtigten Zugriffen geschützt werden kann.

Nach Ausführungsformen umfasst die Authentifizierungsanfrage die Challenge und das Erzeugen der Response erfolgt auf die erfolgreiche Authentifizierung des Nutzers hin. Ausführungsformen können den Vorteil haben, dass das Challenge-Response-Verfahren in effizienter und effektiver Weise implementiert werden kann. Zugleich belegt und bestätigt die Response die erfolgreiche Authentifizierung des Nutzers.

Nach Ausführungsformen umfasst das Authentifizieren des Nutzers:
- Erfassen zumindest eines Authentifizierungsfaktors des Nutzers unter Verwendung des Authentifizierungssensor,
- Validieren des erfassten Authentifizierungsfaktors unter Verwendung des ersten Sicherheitselements.

Ausführungsformen können den Vorteil haben, dass ein effektives und sicheres Verfahren zum Authentifizieren des Nutzers bereitgestellt wird.

Nach Ausführungsformen umfasst das Bestätigen der erfolgreichen Authentifizierung des Nutzers ein Senden einer Authentifizierungsbestätigung des zweiten Sicherheitselements, beispielsweise des Sicherheitsapplets, an das Anwendungsprogramm auf eine erfolgreiche Validierung der Response hin.

Ausführungsformen können den Vorteil haben, dass die Authentifizierung dem Anwendungsprogramm gegenüber bestätigt wird. Ferner kann das Anwendungsprogramm die Authentifizierungsbestätigung als Nachweis für die erfolgreiche Authentifizierung nutzen. Nach Ausführungsformen ist ein Vorliegen einer Authentifizierungsbestätigung eine Voraussetzung für ein Ausführen von ein oder mehreren Funktionen des Anwendungsprogramms.

Nach Ausführungsformen handelt es sich bei dem Anwendungsprogramm um ein ID-Anwendungsprogramm, welches dazu konfiguriert ist ein oder mehrere dem Nutzer zugeordnete Identitätsattribute zu verwalten.

Ausführungsformen können den Vorteil haben, dass das eine ID-Anwendungsprogramm eine oder mehrere auf den Identitätsattributen basierende digitale Identitäten des Nutzers bereitstellen kann. Durch das Authentifizieren des Nutzers gegenüber dem ID-Anwendungsprogramm kann unter Verwendung des ersten Sicherheitselements und des zweiten Sicherheitselements und/oder des Sicherheitsapplets des zweiten Sicherheitselements eine kryptographisch gesicherte Verknüpfung zwischen der realen Welt, d.h. der Person des Nutzers, und der digitalen Welt, d.h. den dem Nutzer zugeordneten digitalen Identitätstattributen, implementiert werden.

Nach Ausführungsformen setzt eine Nutzung der Identitätsattribute eine erfolgreiche Authentifizierung des Nutzers des mobilen Endgeräts voraus.

Die Identitätsattribute definieren beispielsweise eine digitale Identität. Diese digitale Identität kann auf einer von einem ID-Token bereitgestellten primären Identität beruhen und/oder von dieser primären Identität abgeleitet sein. Nach Ausführungsformen kann die digitale Identität eine Kopie der primären Identität sein.

Nach Ausführungsformen kann die von dem mobilen Endgerät bereitgestellte digitale Identität ohne weitere nutzerseitige Hardware zum Authentisieren und/oder Identifizieren des Nutzers verwendet werden.

Nach Ausführungsformen werden die Identitätsattribute aus einem ID-Token ausgelesen, welches eine die Identitätsattribute umfassende primäre Identität bereitstellt. Das Auslesen kann beispielsweise kontaktlos erfolgen, etwa unter Verwendung einer NFC-Kommunikation. In diesem Fall umfasst das mobile Endgerät beispielsweise eine Kommunikationsschnittstelle für eine kontaktlose Kommunikation, wie etwa eine NFC-Kommunikation. Unter einem ID-Token wird hier eine Vorrichtung, insbesondere eine elektronische Vorrichtung wie etwa ein elektronisches Ausweisdokument verstanden, welche eine Identitätsattribute umfassende primäre Identität zu Identifikationszwecke bereitstellt. Bei der Vorrichtung kann es sich beispielsweise um einen sogenannten USB-Stick, eine Chipkarte, oder ein Dokument handeln. Insbesondere wird unter einem ID-Token eine tragbare elektronische Vorrichtung verstanden, welche einen Prozessor zum Ausführen von Programminstruktionen und einen Speicher zum Speichern von Programminstruktionen umfasst, wobei die Identitätsattribute in dem Speicher gespeichert sind und unter Verwendung des Prozessors auf Anfrage zu Nachweiszwecken über eine Kommunikationsschnittstelle des ID-Tokens bereitgestellt werden können. Bei der Kommunikationsschnittstelle handelt es sich beispielsweise kontaktlos um eine kontaktlose Kommunikationsschnittstelle.

Unter einem Dokument wird insbesondere ein Ausweis-, Wert- oder Sicherheitsdokument, insbesondere ein hoheitliches Dokument mit elektronischen Mitteln, wie Prozessor, Speicher und Kommunikationsschnittstelle, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Nach Ausführungsformen weist der ID-Token keine eigene Energieversorgung auf. Als Energiequelle kann vielmehr eine Vorrichtung zum Ernten (energy harvesting) von Energie dienen, welche etwa von dem mobilen Endgerät an das ID Token übertragen wird, beispielsweise unter Verwendung von als RFID-Antennen konfigurierten Kommunikationsschnittstellen.

Nach Ausführungsformen ist das ID-Anwendungsprogramm dazu konfiguriert ein oder mehrere der Identitätsattribute des Nutzers an ein weiteres Endgerät zu senden. Ausführungsformen können den Vorteil haben, dass das Senden der Identitätsattribute des Nutzers eine erfolgreiche Authentifizierung des Nutzers des mobilen Endgeräts voraussetzt. Somit kann eine sichere Nutzung der Identitätsattribute allein durch den Nutzer selbst und/oder mit dessen Zustimmung sichergestellt werden.

Das Senden der Identitätsattribute kann beispielsweise unter Verwendung einer kabellosen Kommunikationsverbindung, wie etwa einer NFC-Verbindung, einer Bluetooth-Verbindung oder einer WiFi-Verbindung erfolgen.

Nach Ausführungsformen ist das ID-Anwendungsprogramm dazu konfiguriert ein oder mehrere der Identitätsattribute des Nutzers unter Verwendung der Kommunikationsschnittstelle über ein Netzwerk an einen ID-Provider-Server zum Bereitstellen für einen Service-Provider-Server und/oder zur Bestätigung gegenüber dem Service-Provider-Server zu senden.

Ausführungsformen können den Vorteil haben, dass ein sicheres Bereitstellen der Identitätsattribute des Nutzers gewährleistet werden kann, wobei das Bereitstellen eine Nutzerauthentifizierung voraussetzt und wobei das Bereitstellen nur durch eine dazu berechtigte externe Instanz, d.h. den ID-Provider erfolgt.

Ein Senden von Identitätsattributen an den ID-Provider-Server setzt beispielsweise eine Authentifizierung des ID-Provider-Servers, einen Nachweis einer Berechtigung seitens des ID-Provider-Servers zum Zugriff auf die Identitätsattribute, einen Aufbau eines verschlüsselten Kanals zur sicheren Übertragung der Identitätsattribute und/oder eine Sicherung der Authentizität der übertragen Identitätsattribute voraus. Hierzu stellt das zweite Sicherheitselement und/oder das Sicherheitsapplet des zweiten Sicherheitselements kryptographische Mittel bereit. Die kryptographischen Mittel umfassen beispielsweise ein asymmetrisches Schlüsselpaar des zweiten Sicherheitselements bzw. des Sicherheitsapplets, insbesondere einen privaten kryptographischen Schlüssel des zweiten Sicherheitselements bzw. des Sicherheitsapplets, sowie kryptographische Protokolle zur Berechnung von ephemeren Sitzungsschlüsseln, insbesondere von symmetrischen ephemeren Sitzungsschlüsseln.

Die Authentizität der übertragen Identitätsattribute kann beispielsweise durch Verwendung eines Message Authentication Codes (MAC) sichergestellt werden. Die von dem zweiten Sicherheitselement und/oder von dem Sicherheitsapplet des dem zweiten Sicherheitselements bereitgestellten kryptographische Protokolle sind beispielsweise zum Berechnen eines MAC konfiguriert, d.h. umfasst einen MAC-Algorithmus. Ein MAC wird beispielsweise unter Verwendung eines MAC-Algorithmus berechnet, welchem zu schützende Daten, d.h. die Identitätsattribute, und ein kryptographischer Schlüssel, beispielsweise ein symmetrischer kryptographischer Schlüssel, als Eingabedaten zur Verfügung gestellt werden. Unter Verwendung dieser Eingabedaten berechnet der MAC-Algorithmus eine Prüfsumme, welche als MAC dient. Zum Berechnen eines MAC können beispielsweise Blockchiffren oder Hash-Funktionen verwendet werden. Als MAC kann beispielsweise ein HMAC (Keyed-Hash Message Authentication Code) verwendet werden, für dessen Konstruktion eine kryptographische Hash-Funktion, wie beispielsweise der Secure Hash Algorithm (SHA), und ein kryptographischer Schlüssel, beispielsweise ein symmetrischer kryptographischer Schlüssel, verwendet wird.

Zur Sicherung einer Datenübertragung, beispielsweise einer Übertragung von Identitätsattributen, wird zwischen Sender, beispielsweise das zweiten Sicherheitselement und/oder dem Sicherheitsapplet des zweiten Sicherheitselements, und Empfänger, beispielsweise dem ID-Provider-Server, ein kryptographischer Schlüssel, beispielsweise ein symmetrischer kryptographischer Schlüssel, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Die übertragenen Daten werden dabei beispielsweise mit demselben kryptographischen Schlüssel. Der Empfänger entschlüsselt die empfangenen Daten unter Verwendung des kryptographischen Schlüssels und berechnet seinerseits einen MAC für die empfangenen Daten unter Verwendung des kryptographischen Schlüssels. Das Ergebnis vergleich der Empfänger mit dem empfangenen MAC. Im Falle einer Übereinstimmung zwischen berechnetem MAC und empfangenen MAC ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin unter Verwendung des Signaturprüfschlüssels prüfen, aber nicht selbst berechnen.

Beispielsweise kann eine von dem mobilen Endgerät bereitgestellte digitale Identität für ein Inanspruchnehmen eines von einem Service-Provider-Server bzw. Dienstanbieter-Server bereitgestellten Webservice verwendet werden. Beispielsweise kann das ID-Anwendungsprogramm zum Registrieren bei dem Webservice verwendet werden. Hierzu ruft der Nutzer mit einem mobilen Browser des mobilen Endgeräts eine Website des Dienstanbieters auf oder kontaktiert den Dienstanbieter unter Verwendung eines auf dem mobilen Endgerät installierten Anwendungsprogramm des Dienstanbieters. Beispielsweise klickt der Nutzer auf eine Login-Schaltfläche. Beispielsweise wählt der Nutzer eine Registrierung unter Verwendung des ID-Anwendungsprogramms. Daraufhin wird das ID-Anwendungsprogramm gestartet und der Nutzer wird von dem ID-Anwendungsprogramm aufgefordert, sich gegenüber dem ID-Anwendungsprogramm unter Verwendung des mobilen Endgeräts zu authentifizieren. Hierzu verwendet der Nutzer das mobile Endgerät mit dem ersten Sicherheitselement und stellt diesem unter Verwendung des Authentifizierungssensors Authentifizierungsfaktoren bzw. Authentifizierungsdaten zur Authentifizierung zur Verfügung. Auf ein erfolgreiches Authentifizieren des Nutzers gegenüber dem ID-Anwendungsprogramm, wird eine sichere Verbindung zwischen dem zweiten Sicherheitselement und/oder dem Sicherheitsapplet des zweiten Sicherheitselements einerseits und dem Service-Provider-Server andererseits aufgebaut. Beispielsweise handelt es sich bei der sicheren Verbindung um eine verschlüsselte, insbesondere eine mittels Ende-zu-Ende-Verschlüsselung verschlüsselte Verbindung. Beispielsweise umfasst der Aufbau der sicheren Verbindung eine gegenseitige Authentifizierung von auslesendem Service-Provider-Server und zweitem Sicherheitselement bzw. Sicherheitsapplet des zweiten Sicherheitselements, d.h. einer Authentifizierung des auslesenden Servers durch das zweite Sicherheitselement und/oder durch das Sicherheitsapplet des zweiten Sicherheitselements sowie einer Authentifizierung des zweiten Sicherheitselements und/oder des Sicherheitsapplets des zweiten Sicherheitselements durch den auslesenden Server. Über diese beispielsweise mittels Verschlüsselung gesicherten Verbindung können zur Registrierung erforderliche Identitätsattribute, etwa personenbezogene Date des Nutzers, wie beispielsweise Vorname, Nachname, Geburtsdatum, Anschrift etc. an den Service-Provider-Server übermittelt werden. Nach Ausführungsformen sieht der Nutzer dabei, welche Art von personenbezogenen Daten an den Service-Provider-Server weitergeleitet werden sollen und kann deren Übertragung durch eine Nutzerauthentifizierung zustimmen. Im Falle einer erfolgreichen Nutzerverifizierung werden die erforderlichen Identitätsattribute an den Service-Provider-Server gesendet und der Nutzer wird zu einer authentifizierten Web-Sitzung mit dem Service-Provider weitergeleitet.

Nach Ausführungsformen umfasst das ID-Anwendungsprogramm ein ID-Verwaltungsmodul, welches eine Mehrzahl von ID-Profilen verwaltet, wobei jedem der ID-Profile jeweils ein unabhängiges Sicherheitsapplet in dem zweiten Sicherheitselement zugeordnet ist.

Ausführungsformen können den Vorteil haben, dass durch das ID-Anwendungsprogramm eine Mehrzahl unterschiedlicher ID-Profile und mithin digitalen Identitäten des Nutzers verwaltet werden können. Jeder dieser digitalen Identitäten des Nutzers ist ein eigenes von den weiteren Sicherheitsapplets unabhängiges Sicherheitsapplet zugordnet. Mithin ist jede digitale Identität durch ein eigens Sicherheitsapplet abgesichert. Beispielsweise handelt es sich bei ein oder mehreren der digitalen Identitäten um digitale Identitäten des Nutzers, welche das ID-Anwendungsprogramm für andere Instanzen verwaltet, wie beispielsweise andere Anwendungsprogramme und/oder Service-Provider. Beispielsweise können den unterschiedlichen ID-Profilen bzw. digitalen Identitäten unterschiedliche Sicherheitsniveaus zugeordnet sein, welche durch das jeweils zugeordnete Sicherheitsapplet zu erfüllen sind. Ferner können für unterschiedliche ID-Profile bzw. digitale Identitäten jeweils unterschiedliche Authentifizierungsfaktoren in dem ersten Sicherheitselement festgelegt und dem jeweiligen Profil bzw. dem dem jeweiligen Profil zugeordneten Sicherheitsapplet zugeordnet sein. Mithin muss der Nutzer in diesem Fall für unterschiedliche digitale Identitäten unterschiedliche Authentifizierungsfaktoren für eine erfolgreiche Authentifizierung nachweisen. Die einzelnen Authentifizierungsfaktoren und/oder deren Kombinationen können unterschiedliche Sicherheitsniveaus erfüllen, beispielsweise aufgrund unterschiedlicher Entropien.

Nach Ausführungsformen ist jedem der ID-Profile jeweils ein Satz von ein oder mehreren Identitätsattributen zugeordnet. Die Sätze von Identitätsattributen entstammen beispielsweise einem ID-Token.

Ausführungsformen umfassen ferner ein System. Das System umfasst ein mobiles Endgerät zum Authentifizieren eines Nutzers gegenüber einem auf einem mobilen Endgerät installierten Anwendungsprogramm. Das mobile Endgerät umfasst einen Prozessor, Auf dem Endgerät ist ein Betriebssystem installiert, welches dazu konfiguriert ist zumindest einen Authentifizierungssensor des Endgeräts zum Erfassen zumindest eines Authentifizierungsfaktors des Nutzers zu steuern. Das Endgerät umfasst ferner ein dem Betriebssystem zugeordnetes erstes Sicherheitselement, welches kryptographische Mittel zum Ausführen eines Challenge-Response-Verfahrens umfasst. In einem geschützten Speicherbereich des ersten Sicherheitselements ist ein privater kryptographischer Schlüssel eines asymmetrischen Schlüsselpaars des ersten Sicherheitselements gespeichert.

Das System umfasst ferner ein von dem ersten Sicherheitselement unabhängiges zweites Sicherheitselement, welches kryptographische Mittel zum Ausführen eines Challenge-Response-Verfahrens umfasst.

Der Prozessor ist dazu konfiguriert ein Verfahren zum Authentifizieren eines Nutzers gegenüber einem auf einem mobilen Endgerät installierten Anwendungsprogramm auszuführen, welches umfasst:
- auf eine Authentifizierungsanfrage des Anwendungsprogramms hin, Authentifizieren des Nutzers durch das Betriebssystem unter Verwendung des Authentifizierungssensors und des ersten Sicherheitselements,
- Ausführen eines Challenge-Response-Verfahrens zwischen dem ersten Sicherheitselement und dem zweiten Sicherheitselement, wobei das Challenge-Response-Verfahren ein Erzeugen einer Response durch das ersten Sicherheitselement zum Validieren durch das zweite Sicherheitselement umfasst, wobei das Erzeugen der Response ein Verschlüsseln einer Challenge des zweiten Sicherheitselements durch das erste Sicherheitselement unter Verwendung des privaten kryptographischen Schlüssels des ersten Sicherheitselements umfasst zum Validieren durch ein Entschlüsseln der Response des ersten Sicherheitselements durch das zweite Sicherheitselement unter Verwendung eines öffentlichen kryptographischen Schlüssels des asymmetrischen Schlüsselpaars des ersten Sicherheitselements, wobei ein erfolgreiches Ausführen des Challenge-Response-Verfahrens eine erfolgreiche Authentifizierung des Nutzers durch das Betriebssystem bestätigt,
- auf ein erfolgreiches Ausführen des Challenge-Response-Verfahrens hin, Bestätigen der erfolgreichen Authentifizierung des Nutzers gegenüber dem Anwendungsprogramm durch das zweite Sicherheitselement.

Nach Ausführungsformen ist das mobile Endgerät und/oder das System dazu konfiguriert jede der zuvor beschrieben Ausführungsformen des Verfahrens zum Authentifizieren des Nutzers gegenüber dem auf dem mobilen Endgerät installierten Anwendungsprogramm auszuführen.

Nach Ausführungsformen umfasst das Endgerät das zweite Sicherheitselement.

Nach Ausführungsformen umfasst das Endgerät eine Kommunikationsschnittstelle zur Kommunikation über ein Netzwerk, wobei das System ferner einen Server umfasst, welcher das zweite Sicherheitselement bereitstellt.

Nach Ausführungsformen umfasst das System ferner einen Initialisierungsserver. Der Initialisierungsserver ist zum Initialisieren des ersten Sicherheitselements konfiguriert und umfasst eine Schreibberechtigung zum Initialisieren des ersten Sicherheitselements.

Das Initialisieren umfasst:
- Erzeugen des asymmetrischen Schlüsselpaars des ersten Sicherheitselements durch das erste Sicherheitselement,
- Validieren der Schreibberechtigung des Initialisierungsserver zum Initialisieren des zweiten Sicherheitselements,
- auf ein erfolgreiches Validieren der Schreibberechtigung des Initialisierungsservers, Gewähren eines Schreibzugriffs des externen Initialisierungsservers über die Kommunikationsschnittstelle auf das zweite Sicherheitselement,
- Initialisieren des ersten Sicherheitselements,
- Schreiben des asymmetrischen Schlüsselpaars des ersten Sicherheitselements in den initialisierten Speicherbereich.

Nach Ausführungsformen ist das System dazu konfiguriert jede der zuvor beschrieben Ausführungsformen eines Initialisierens des ersten Sicherheitselements auszuführen.

Nach Ausführungsformen umfasst das System einen weiteren Initialisierungsserver zum Initialisieren des zweiten Sicherheitselements und/oder eines Sicherheitsapplets in dem zweiten Sicherheitselement, welcher eine Schreibberechtigung zum Initialisieren des zweiten Sicherheitselements und/oder des Sicherheitsapplets in dem zweiten Sicherheitselement umfasst.

Das Initialisieren umfasst:
- Validieren der Schreibberechtigung des weiteren Initialisierungsservers zum Initialisieren des Sicherheitsapplets in dem zweiten Sicherheitselement,
- auf ein erfolgreiches Validieren der Schreibberechtigung des weiteren Initialisierungsservers, Gewähren eines Schreibzugriffs des Weiteren externen Initialisierungsservers über die Kommunikationsschnittstelle auf das zweite Sicherheitselement,
- Initialisieren des dem Sicherheitsapplet zugeordneten Speicherbereich des zweiten Sicherheitselements,
- Schreiben des ersten asymmetrischen Schlüsselpaars in den initialisierten Speicherbereich.

Nach Ausführungsformen ist das System dazu konfiguriert jede der zuvor beschrieben Ausführungsformen des Verfahrens zum Initialisieren des zweiten Sicherheitselements und/oder des Sicherheitselements des zweiten Sicherheitselements auszuführen.

Nach Ausführungsformen umfasst das System ferner einen Provisionierungsserver. Der Provisionierungsserver ist zum Provisionieren des zweiten Sicherheitselements konfiguriert und umfasst eine Schreibberechtigung zum Schreiben in einen Speicherbereich des zweiten Sicherheitselements.

Das Provisionieren umfasst:
- Empfangen eines öffentlichen kryptographischen Schlüssels des asymmetrischen Schlüsselpaars des ersten Sicherheitselements,
- Validieren der Schreibberechtigung des Provisionierungsservers zum Schreiben in den Speicherbereich des zweiten Sicherheitselements,
- auf ein erfolgreiches Validieren der Schreibberechtigung des Provisionierungsservers, Gewähren eines Schreibzugriffs des externen Provisionierungsservers über die Kommunikationsschnittstelle auf den Speicherbereich des zweiten Sicherheitselements,
- Schreiben des öffentlichen kryptographischen Schlüssels des asymmetrischen Schlüsselpaars des ersten Sicherheitselements in den Speicherbereich des zweiten Sicherheitselements.

Nach Ausführungsformen ist das System dazu konfiguriert jede der zuvor beschrieben Ausführungsformen des Verfahrens zum Provisionieren des zweiten Sicherheitselements auszuführen.

Nach Ausführungsformen umfasst das System ferner einen ID-Provider-Server. Bei dem Anwendungsprogramm handelt es sich um ein ID-Anwendungsprogramm, welches dazu konfiguriert ist ein oder mehrere in dem mobilen Endgerät gespeicherte und dem Nutzer zugeordnete Identitätsattribute zu verwalten. Der ID-Provider-Server ist zum Bereitstellen und/oder Bestätigen von ein oder mehreren der Identitätsattribute des Nutzers für einen Service-Provider-Server konfiguriert und umfasst eine Leseberechtigung zum Lesen ein oder mehrere der Identitätsattribute des Nutzers. Das Bereitstellen und/oder Bestätigen von ein oder mehreren der Identitätsattribute des Nutzers für einen Service-Provider-Server umfasst:
- Validieren der Leseberechtigung des ID-Provider-Server zum Lesen ein oder mehrere der Identitätsattribute des Nutzers,
- auf ein erfolgreiches Validieren der Leseberechtigung, Senden ein oder mehrere der Identitätsattribute des Nutzers an den ID-Provider-Server,
- Signieren der gesendeten ein oder mehrere der Identitätsattribute des Nutzers durch den ID-Provider-Server,
- Senden der signierten ein oder mehrere der Identitätsattribute des Nutzers an den Service-Provider-Server.

Nach Ausführungsformen ist das System dazu konfiguriert jede der zuvor beschrieben Ausführungsformen des Verfahrens zum Bereitstellen von Nutzerattributen auszuführen.

Im Weiteren werden Ausführungsformen der Erfindung mit Bezugnahme auf die Zeichnungen näher erläutert. Es zeigen:
- Figur 1: ein schematisches Diagramm eines exemplarischen mobilen Endgeräts,
- Figur 2: ein schematisches Diagramm eines exemplarischen mobilen Endgeräts,
- Figur 3: ein Flussdiagramm eines exemplarischen Verfahrens zum Authentifizieren eines Nutzers,
- Figur 4: ein Flussdiagramm eines exemplarischen Verfahrens zum Authentifizieren eines Nutzers,
- Figur 5: ein schematisches Diagramm eines exemplarischen mobilen Endgeräts,
- Figur 6: ein Flussdiagramm eines exemplarischen Verfahrens zum Provisionieren eines öffentlichen kryptographischen Schlüssels,
- Figur 7: ein Flussdiagramm eines exemplarischen Verfahrens zum Initialisieren eines Speicherbereich eines Sicherheitselements, und
- Figur 8: ein Flussdiagramm eines exemplarischen Verfahrens zum Initialisieren eines Speicherbereich eines Sicherheitsapplets,
- Figur 9: ein schematisches Diagramm eines exemplarischen Systems, und
- Figur 10: ein schematisches Diagramm eines exemplarischen Servers, welcher ein entferntes Sicherheitselement bereitstellt.

Elemente der nachfolgenden Ausführungsformen, die einander entsprechen, werden mit denselben Bezugszeichen gekennzeichnet.

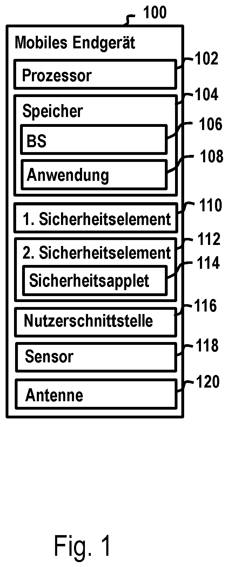

Figur 1 zeigt ein exemplarisches mobiles Endgerät 100, beispielsweise ein Smartphone, welches einen Speicher 104 mit Programminstruktionen umfasst, welche von einem Prozessor 102 ausgeführt werden. Die Programminstruktionen können beispielsweise ein auf dem mobiles Endgerät 100 installierten Betriebssystems 106 und ein Anwendungsprogramms 108 umfassen. Ferner umfasst das mobile Endgerät ein erstes Sicherheitselement 110. Beispielsweise umfasst das mobile Endgerät 100 ferner ein zweites Sicherheitselemente 112. Die Sicherheitselemente 110, 112 können beispielsweise jeweils als eSim und/oder eUICC implementiert sein. Das erste Sicherheitselement 110 ist dem Betriebssystem zugeordnet und stellt für dieses kryptographische Mittel bereit, wie beispielsweise kryptographische Schlüssel, kryptographische Funktionen und/oder kryptographische Protokolle. Das erste Sicherheitselement 110 stellt beispielsweise einen Key Store bzw. Schlüsselspeicher zum Speichern von kryptographischen Schlüsseln bereit, wie etwa symmetrischer, öffentlicher und/oder privater kryptographischer Schlüssel, und von Zertifikaten, wie beispielsweise Berechtigungszertifikate, Public-Key-Zertifikate und/oder Attributzertifikate. Die von dem ersten Sicherheitselement 110 bereitgestellten kryptographischen Mittel versetzten das Betriebssystem 106 dazu in die Lage, ein Challenge Response-Verfahrens auszuführen bzw. an diesem teilzunehmen. Zu diesem Zweck umfassen die kryptographischen Mittel beispielsweise einen privaten kryptographischen Schlüssel eines asymmetrischen Schlüsselpaars des ersten Sicherheitselements, welcher in einem geschützten Speicherbereich des ersten Sicherheitselements gespeichert ist. Der entsprechende private kryptographische Schlüssel dient beispielsweise als Signaturschlüssel zum Signieren einer Challenge im Zuge eines Erzeugens einer Response auf die Challenge.

Auf dem zweiten Sicherheitselement 112 ist beispielsweise ein dem Anwendungsprogramm 108 zugeordnetes Sicherheitsapplet 114 installiert. Dieses Sicherheitsapplet 114 stellt kryptographische Mittel für das Anwendungsprogramm 108 bereit, wie beispielsweise kryptographische Schlüssel, kryptographische Funktionen und/oder kryptographische Protokolle. Das Sicherheitsapplet 114 bzw. ein dem Sicherheitsapplet 114 zugeordneter Speicherbereich des zweiten Sicherheitselements 112 stellt beispielsweise einen Key Store bzw. Schlüsselspeicher zum Speichern von kryptographischen Schlüsseln bereit, wie etwa symmetrischer, öffentlicher und/oder privater kryptographischer Schlüssel, und von Zertifikaten, wie beispielsweise Berechtigungszertifikate, Public-Key-Zertifikate und/oder Attributzertifikate. Die von dem zweiten Sicherheitselement 112 bereitgestellten kryptographischen Mittel versetzten das Anwendungsprogramm 108 dazu in die Lage ein Challenge Response-Verfahrens auszuführen bzw. an diesem teilzunehmen. Zu diesem Zweck verfügt das zweite Sicherheitselement 112 und/oder das Sicherheitsapplet 114 des Sicherheitselements beispielsweise über einen öffentlichen kryptographischen Schlüssel des asymmetrischen Schlüsselpaars des ersten Sicherheitselements. Der entsprechende öffentliche kryptographische Schlüssel dient beispielsweise als Signaturprüfschlüssel zum Prüfen einer Signatur einer signierten Challenge, welche im Zuge eines Challenge Response-Verfahrens als Response auf die entsprechende Challenge empfangen wird.

Ferner umfasst das mobile Endgerät 100 eine Nutzerschnittelle 116, welche beispielsweise ein Display, insbesondere einen Touchscreen, umfasst. Unter Verwendung des Nutzerschnittelle 116, kann der Nutzer mit dem mobiles Endgerät 100 interagieren. Beispielsweise kann der Nutzer zum Bereitstellen von Authentifizierungsdaten bzw. Authentifizierungsmerkmalen aufgefordert werden. Zum Erfassen von Authentifizierungsdate des Nutzers umfasst das mobile Endgerät 100 einen Sensor bzw. Authentifizierungssensor 118, welcher beispielsweise in die Nutzerschnittstelle 116 integriert oder als eigenständige Komponente implementiert sein kann. Die Authentifizierungsdaten können beispielsweise biometrische Daten des Nutzers umfassen, wie beispielsweise: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Die Authentifizierungsdaten können beispielsweise ein Wissen des Nutzers umfassen, wie eine PIN oder Passwort. Ferner können die Authentifizierungsdaten beispielsweise Verhaltensmerkmale bzw. Verhaltensdaten des Nutzers umfassen, wie beispielsweise Bewegungsdaten des mobile Endgerät 100, welche durch von grob- und/oder feinmotorische Bewegungen des Nutzers verursacht werden, wenn dieser das des mobile Endgerät 100 bei sich trägt und/oder nutzt. Ein entsprechendes Authentifizieren des Nutzers kann beispielsweise Voraussetzung für ein Freigeben von Identitätsattributen der elektronischen Identität zum Auslesen durch ein auslesendes Computersystem sein. Durch eine entsprechende Nutzerauthentifizierung kann zum einen sichergestellt werden, dass das mobile Endgerät 100 von einem berechtigten Nutzer genutzt wird. Zum andern kann das Bereitstellen von Authentifizierungsdaten durch den Nutzer ein Einverständnis des Nutzers zum Auslesen der Identitätsattributen der elektronischen Identität durch das auslesende Computersystem darstellen. Schließlich umfasst das mobile Endgerät 100 eine Kommunikationsschnittstelle bzw. Antenne 120, welche konfiguriert ist für eine kabellose Kommunikation, beispielsweise über ein Netzwerk. Beispielsweise kann die Kommunikation mit dem auslesenden Computersystem über ein Netzwerk, wie etwa ein Intranet oder das Internet, erfolgen.

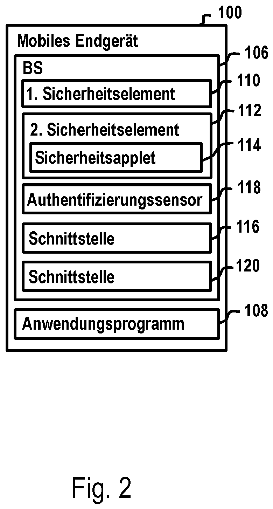

Figur 2 zeigt ein exemplarisches mobiles Endgerät 100, auf welchem ein Betriebssystem 106 installiert ist, welches die Ressourcen des mobiles Endgerät 100 verwaltet und dem Anwendungsprogramm 108 zur Verfügung stellt. Die verwalteten Ressourcen umfassen beispielsweise ein erstes Sicherheitselement 110. Ferner können die Ressourcen beispielsweise eine zweites Sicherheitselement 112 umfassen. Zudem umfasst die Ressourcen den Authentifizierungssensor 118, die Nutzerschnittstelle 116 und die Kommunikationsschnittstelle 120. Dabei wird das zweite Sicherheitselement 112 zwar beispielsweise von dem Betriebssystem 106 bereitgestellt bzw. verwaltet, das von dem zweiten Sicherheitselement 112 umfasste Sicherheitsapplet 114 ist jedoch dem Anwendungsprogramm 108 zugeordnet, d.h. das Sicherheitsapplet 114 stellt nur dem Anwendungsprogramm 108 kryptographische Mittel zur Verfügung. Das Betriebssystem 106 kann diese kryptographischen Mittel nicht nutzen. Für kryptographische Aufgaben, etwa im Zuge einer Verwendung des Authentifizierungssensors 118 oder der Kommunikationsschnittelle 120, steht dem Betriebssystem 106 vielmehr das erste Sicherheitselement 110 mit seinen kryptographischen Mitteln zur Verfügung.

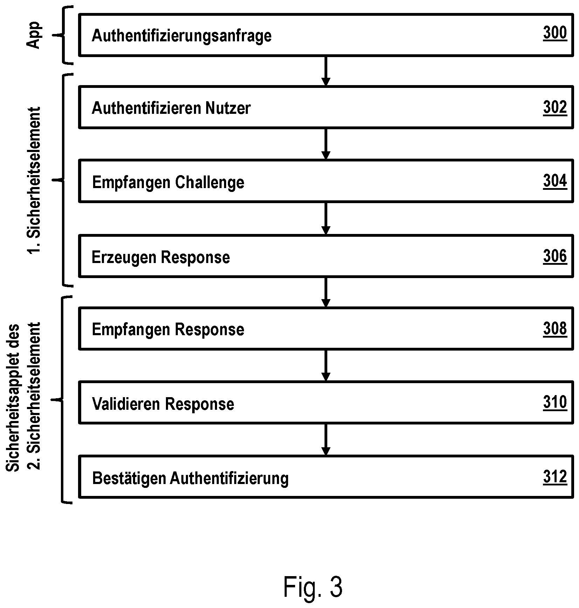

Figur 3 zeigt ein exemplarisches Verfahren zum Authentifizieren eines Nutzers gegenüber einem auf einem mobilen Endgerät installierten Anwendungsprogramm. In Schritt 300 stellt das Anwendungsprogramm (App) eine Authentifizierungsanfrage zum Authentifizieren des Nutzers des mobilen Endgeräts an das Betriebssystem des mobilen Endgeräts. Das Betriebssystem veranlasst einen Authentifizierungssensor des mobilen Endgeräts zum Erfassen eines oder mehrere Authentifizierungsmerkmale des Nutzers. In Schritt 302 wird der Nutzer unter Verwendung des ersten Sicherheitselements anhand der erfassten Authentifizierungsmerkmale authentifiziert. Nach Ausführungsformen werden die erfassten Authentifizierungsmerkmale mit hinterlegten Referenzmerkmalen verglichen. Bei einer hinreichenden Übereinstimmung zwischen erfassten Authentifizierungsmerkmalen und hinterlegten Referenzmerkmalen ist die Authentifizierung erfolgreich. In Schritt 304 empfängt das erste Sicherheitselement eine Challenge eines Challenge-Response-Verfahrens zum Bestätigen einer erfolgreichen Nutzerauthentifizierung. Die Challenge umfasst beispielsweise ein Nonce. Nach Ausführungsformen kann die Challenge vor oder nach der Authentifizierung empfangen werden. Insbesondere kann die Authentifizierungsanfrage die Challenge umfassen. Die Challenge wird beispielsweise von dem zweiten Sicherheitselement und/oder einem Sicherheitsapplet des zweiten Sicherheitselements erzeugt und dem Anwendungsprogramm zum Ausführen des Challenge-Response-Verfahrens zur Verfügung gestellt. In Schritt 306 erzeugt das erste Sicherheitselement eine Response. Hierzu wird beispielsweise die Challenge mit einem privaten kryptographischen Schlüssel des ersten Sicherheitselements als Signaturschlüssel signiert. Der entsprechende private kryptographische Schlüssel des ersten Sicherheitselements ist beispielsweise in einem geschützten Speicherbereich des ersten Sicherheitselements gespeichert. Die Response wird von dem ersten Sicherheitselement, beispielsweise über das Anwendungsprogramm, an das zweites Sicherheitselement und/oder das Sicherheitsapplet des zweiten Sicherheitselements gesendet. In Schritt 308 empfängt das zweite Sicherheitselement und/oder das Sicherheitsapplet des zweiten Sicherheitselements die Response und validiert diese in Schritt 310. Das zweite Sicherheitselement und/oder das Sicherheitsapplet des zweiten Sicherheitselements verfügt über einen öffentlichen kryptographischen Schlüssel des ersten Sicherheitselements als Signaturprüfschlüssel zum Validieren der Response. Zum Validieren der Response entschlüsselt das zweite Sicherheitselement und/oder das Sicherheitsapplet des zweiten Sicherheitselements die Response, Das Ergebnis ist beispielsweise ein Hashwert der Challenge, welcher mit einem Hashwert der gesendeten Challenge verglichen wird. Falls das Ergebnis der Entschlüsselung und der Hashwert der gesendeten Challenge identisch sind, ist das Challenge-Response-Verfahren erfolgreich. In Schritt 312 bestätigt das zweite Sicherheitselement und/oder das Sicherheitsapplet des zweiten Sicherheitselements die erfolgreiche Authentifizierung des Nutzers, beispielsweise gegenüber dem Anwendungsprogramm.

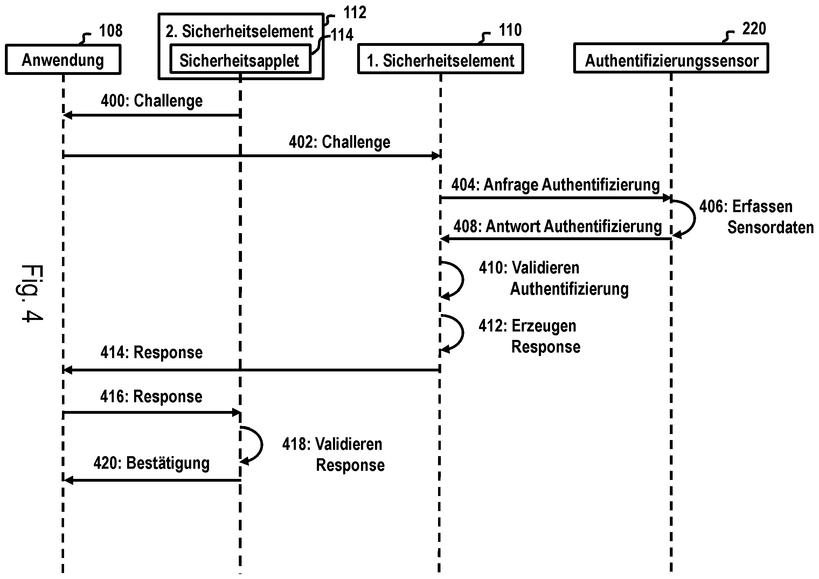

Figur 4 zeigt ein exemplarisches Verfahren zum Authentifizieren eines Nutzers gegenüber einem auf einem mobilen Endgerät installierten Anwendungsprogramm. In Schritt 400 sendet das zweite Sicherheitselement 112 und/oder das Sicherheitsapplet 114 auf dem zweiten Sicherheitselement 112 eine Challenge, beispielsweise ein Nonce, an die Anwendung 108. In Schritt 402 sendet das Anwendungsprogramm 108 die Challenge in Reaktion auf deren Empfang an das erste Sicherheitselement 110. Das Sicherheitselement initiiert daraufhin eine Nutzerauthentifizierung. In Schritt 404 wird eine Authentifizierungsanfrage an den Authentifizierungssensor 118 gesendet. Beispielsweise wird zudem eine Authentifizierungsaufforderung für den Nutzer auf einer Anzeigevorrichtung des mobilen Endgeräts, z.B. einem Display, angezeigt. In Schritt 406 werden von dem Authentifizierungssensor 118 Authentifizierungssensordaten des Nutzers erfasst und als Antwort auf die Authentifizierungsanfrage dem ersten Sicherheitselement in Schritt 408 zur Verfügung gestellt. In Schritt 410 werden die Authentifizierungssensordaten unter Verwendung des ersten Sicherheitselements 110 validiert. Falls die Validierung und mithin die Authentifizierung erfolgreich ist, wird von dem ersten Sicherheitselement 110 in Schritt 412 eine Response auf die Challenge erzeugt. Hierzu wird beispielsweise das Nonce der Challenge mit einem privaten kryptographischen Schlüssel des ersten Sicherheitselement, welcher nur dem ersten Sicherheitselement 110 bekannt ist, signiert. In Schritt 414 wird die Response an das Anwendungsprogramm 108 gesendet, welches die Response in Schritt 416 als Antwort auf die Challenge aus Schritt 400 an das zweite Sicherheitselement 112 und/oder das Sicherheitsapplet 114 auf dem zweiten Sicherheitselement 112 weiterleitet.

In Schritt 418 validiert das zweite Sicherheitselement 112 und/oder das Sicherheitsapplet 114 auf dem zweiten Sicherheitselement 112 die empfangene Response. Beispielsweise entschlüsselt das zweite Sicherheitselement 112 und/oder das Sicherheitsapplet 114 auf dem zweiten Sicherheitselement 112 die Response mit einem öffentlichen kryptographischen Schlüssel des ersten Sicherheitselement und vergleicht das Ergebnis mit einem Hashwert der in Schritt 400 gesendeten Challenge. Falls beide übereinstimmen ist die Validierung erfolgreich und eine gültige Nutzerauthentifizierung erfolgreich nachgewiesen. In Schritt 418 wird zur Bestätigung der erfolgreichen Authentifizierung beispielsweise eine Authentifizierungsbestätigung von dem Sicherheitsapplet 114 an das Anwendungsprogramm gesendet.

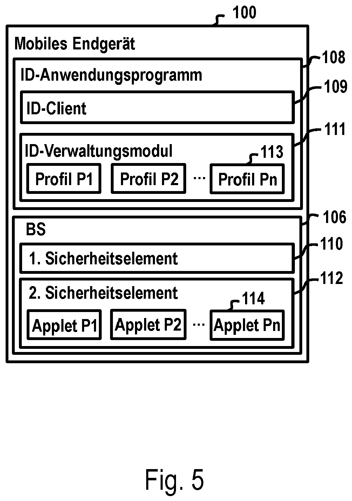

Figur 5 zeigt ein exemplarische mobiles Endgerät 100, auf welchem ein Anwendungsprogramm 108 gespeichert ist, bei dem es sich um ein ID-Anwendungsprogramm handelt. Das ID-Anwendungsprogramm verwaltet dem Nutzer zugeordnete Identitätsattribute. Hierzu umfasst es ein ID-Verwaltungsmodul 111 mit ein oder mehreren ID-Profilen 113. Jedem der ID-Profile 113 ist jeweils ein unabhängiges Sicherheitsapplet 114 in dem zweiten Sicherheitselement 112 zugeordnet. Jedem der ID-Profile 113 ist jeweils ein Satz von ein oder mehreren Identitätsattributen zugeordnet. Diese Identitätsattribute sind beispielsweise jeweils einem Speicherbereich des zweiten Sicherheitselements 112 gespeichert, welcher dem entsprechend Sicherheitsapplet 114 zugeordnet ist, und/oder verschlüsselt in einem Speicher des mobilen Endgeräts gespeichert, wobei die kryptographischen Schlüssel zum Entschlüsseln jeweils in den entsprechenden Sicherheitsapplets 114 gespeichert sind. Das ID-Anwendungsprogramm 108 umfasst ferner einen ID-Clientmodul 109, über welches das ID-Anwendungsprogramm 108 beispielsweise Anfragen nach Identitätsattributen eines der ID-Profile 113 empfangen kann. In Antwort auf die Anfrage, beispielsweise durch einen ID-Provider-Service über ein Netzwerk, kann das ID-Anwendungsprogramm 108 die angefragten Identitätsattribute unter der Voraussetzung einer Zustimmung des Nutzers zur Verfügung stellen. Hierfür kann eine Nutzerauthentifizierung gegenüber dem ID-Anwendungsprogramm 108 notwendig sein bzw. kann ein Nachweis einer erfolgreichen Nutzerauthentifizierung durch das ID-Anwendungsprogramm 108 mittels eines Challenge-Response-Verfahrens notwendig sein. Hierzu wird ein dem Betriebssystem 106 zugeordnetes erstes Sicherheitselement 110 verwendet, von welchem eine erfolgreiche Nutzerauthentifizierung mit einem Authentifizierungssensor 118 des mobilen Endgeräts 100 bestätigt wird.

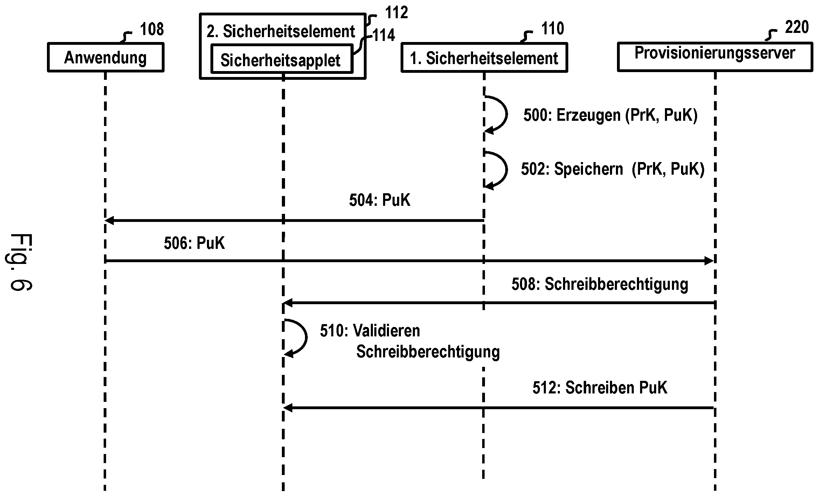

Figur 6 zeigt ein Verfahren zum Bereitstellen des asymmetrischen Schlüssels in dem ersten Sicherheitselement 110 und dem Sicherheitsapplet 114 für das Challenge-Response-Verfahren. In Schritt 500 erzeugt das ersten Sicherheitselement 110 ein asymmetrisches Schlüsselpaar, welches einen privaten kryptographischen Schlüssel PrK und einen öffentlichen kryptographischen Schlüssel PuK, beispielsweis zur Verwendung für das Challenge-Response-Verfahren umfasst. In Schritt 500 speichert das ersten Sicherheitselement 110 das asymmetrisches Schlüsselpaar, wobei der private kryptographische Schlüssel PrK in einem geschützten Speicherbereich eines Speichers des ersten Sicherheitselement 110 gespeichert wird. Den resultierenden öffentlichen kryptographischen Schlüssel PuK sendet das erste Sicherheitselement 110 in Schritt 504 an das Anwendungsprogramm 108, welches in Schritt 506 den öffentlichen kryptographischen Schlüssel PuK an einen Provisionierungsserver 220 mit einer Schreibberechtigung zum Schreiben in einen dem zweiten Sicherheitselement und/oder dem Sicherheitsapplet des zweiten Sicherheitselements zugeordneten Speicherbereich des zweiten Sicherheitselements weiterleitet. In Schritt 508 weist der Provisionierungsserver 220 seine Schreibberechtigung vor, beispielsweise unter Verwendung eines Berechtigungszertifikat und/oder eines hierfür vorgesehenen kryptographischen Schlüssels. In Schritt 510 wird die Schreibberechtigung validiert. Auf ein erfolgreiches Validieren der Schreibberechtigung, wird dem Provisionierungsserver 220 ein Schreibzugriff auf den Speicherbereich des zweiten Sicherheitselements gewährt, in welchen der Provisionierungsserver 220 in Schritt 512 den öffentlichen kryptographischen Schlüssel PuK schreibt.

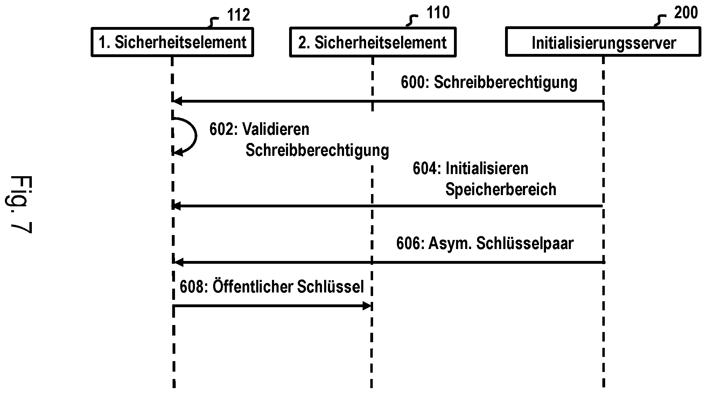

Figur 7 zeigt ein Verfahren zum Initialisieren des ersten Sicherheitselements 110 unter Verwendung eines Initialisierungsserver 200. In Schritt 600 stellt der Initialisierungsserver 200 eine Schreibberechtigung zum Initialisieren des Sicherheitsapplets in dem zweiten Sicherheitselement bereit, welche in Schritt 602 validiert wird. Die Schreibberechtigung kann beispielsweise durch ein entsprechendes Berechtigungszertifikat und/oder eine Verwendung eines hierfür vorgesehenen kryptographischen Schlüssels nachgewiesen werden. Das Bereitstellen der Schreibberechtigung erfolgt beispielsweise über eine kryptographisch gesicherte Kommunikationsverbindung zwischen dem ersten Sicherheitselement 110 und dem Initialisierungsserver 200 oder im Zuge eines Aufbaus der entsprechenden kryptographisch gesicherte Kommunikationsverbindung bzw. eines kryptographisch gesicherten Kommunikationskanals. Bei der kryptographisch gesicherte Kommunikationsverbindung kann es sich beispielsweise um eine Ende-zu-Ende-verschlüsselte Kommunikationsverbindung handeln. Auf eine erfolgreiche Validierung hin, wird dem Initialisierungsserver 200 ein Schreibzugriff über die Kommunikationsschnittstelle auf das erste Sicherheitselement 110 gewährt. In Schritt 604 initialisiert der Initialisierungsserver 200 einen Speicherbereich des ersten Sicherheitselements 110 und schreibt in Schritt 606 ein asymmetrisches Schlüsselpaar in den initialisierten Speicherbereich. Das Initialisieren des Speicherbereich umfasst beispielsweise ein Schreiben eines Dateisystems in den entsprechenden Speicherbereich. In Schritt 608 stellt beispielsweise das erste Sicherheitselement 110 dem zweiten Sicherheitselement und/oder einem Sicherheitsapplet 112 auf dem zweiten Sicherheitselement den öffentlichen kryptographischen Schlüssel des asymmetrischen Schlüsselpaars des ersten Sicherheitselements 110 zur Verfügung. Beispielsweise kann das Zurverfügungstellen des öffentlichen kryptographischen Schlüssels auch unter Verwendung eines Provisionierungsservers 220, wobei die in Figur 6 gezeigten 504 bis 512 Schritte ausgeführt werden.

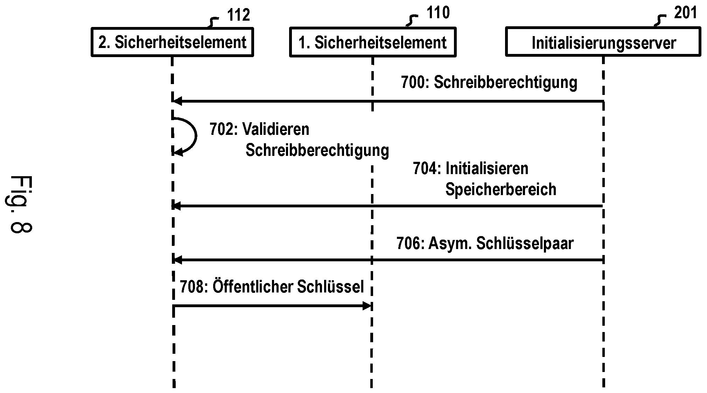

Figur 8 zeigt ein Verfahren zum Initialisieren eines Sicherheitsapplets in einem (zweiten) Sicherheitselement 112 unter Verwendung eines Initialisierungsserver 201. In Schritt 700 stellt der Initialisierungsserver 201 eine Schreibberechtigung zum Initialisieren des Sicherheitsapplets in dem zweiten Sicherheitselement bereit, welche in Schritt 702 validiert wird. Die Schreibberechtigung kann beispielsweise durch ein entsprechendes Berechtigungszertifikat und/oder eine Verwendung eines hierfür vorgesehenen kryptographischen Schlüssels nachgewiesen werden. Das Bereitstellen der Schreibberechtigung erfolgt beispielsweise über eine kryptographisch gesicherte Kommunikationsverbindung zwischen dem zweiten Sicherheitselement 112 und dem Initialisierungsserver 201 oder im Zuge eines Aufbaus der entsprechenden kryptographisch gesicherte Kommunikationsverbindung bzw. eines kryptographisch gesicherten Kommunikationskanals. Bei der kryptographisch gesicherte Kommunikationsverbindung kann es sich beispielsweise um eine Ende-zu-Ende-verschlüsselte Kommunikationsverbindung handeln. Auf eine erfolgreiche Validierung hin, wird dem Initialisierungsserver 201 ein Schreibzugriff über die Kommunikationsschnittstelle auf das zweite Sicherheitselement gewährt. In Schritt 704 initialisiert der Initialisierungsserver 201 den dem Sicherheitsapplet zugeordneten Speicherbereich des zweiten Sicherheitselements 112 und schreibt in Schritt 706 ein asymmetrisches Schlüsselpaar in den initialisierten Speicherbereich. Das Initialisieren des Speicherbereich umfasst beispielsweise ein Schreiben eines Dateisystems in den entsprechenden Speicherbereich. In Schritt 708 stellt beispielsweise das Sicherheitsapplet 112 dem ersten Sicherheitselement 110, beispielsweise über das Anwendungsprogramm, den öffentlichen kryptographischen Schlüssel des asymmetrischen Schlüsselpaars zur Verfügung.

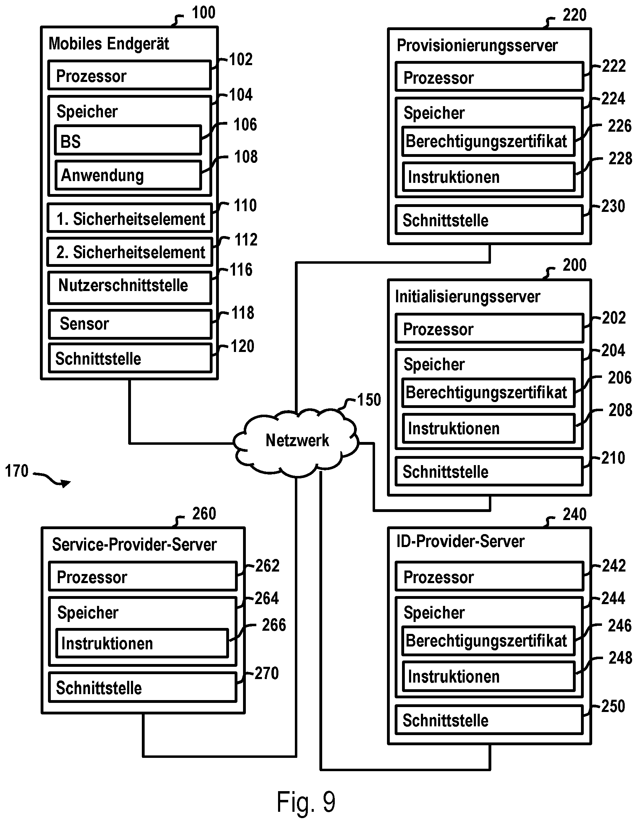

Figur 9 zeigt ein System 170, welches ein mobiles Endgerät 100 umfasst, das über ein Netzwerk 150, beispielsweise das Internet, mit einem Initialisierungsserver 200, einem Provisionierungsserver 220, einem ID-Provider-Server 240 und/oder einem Service-Provider-Server 260 verbunden ist. Bei dem mobilen Endgerät 100 handelt es sich um das mobile Endgerät 100 aus Figur 1.

Der Initialisierungsserver 200 umfasst einen Prozessor 202, einen Speicher 204 und eine Kommunikationsschnittstelle 210. In dem Speicher 204 sind Programminstruktionen 208 gespeichert, bei deren Ausführung der Prozessor 202 den Initialisierungsserver 200 zum Initialisieren des ersten Sicherheitselement 110 des mobile Endgeräts 100 steuert, beispielsweise gemäß dem Verfahren in Figur 7. Zum Nachweis einer Schreibberechtigung zum Initialisieren des Sicherheitsapplets verwendet der Initialisierungsserver 200 beispielsweise das Berechtigungszertifikat 206. Ferner kann beispielsweise ein weiterer analog zum Initialisierungsserver 200 konfigurierter Initialisierungsserver 201 zum Initialisieren des zweiten Sicherheitselement 112 und/oder eines Sicherheitsapplets in dem zweiten Sicherheitselement 112 des mobile Endgeräts 100, beispielsweise gemäß dem Verfahren in Figur 8.

Der Provisionierungsserver 220 umfasst einen Prozessor 222, einen Speicher 224 und eine Kommunikationsschnittstelle 230. In dem Speicher 204 sind Programminstruktionen 228 gespeichert, bei deren Ausführung der Prozessor 222 den Provisionierungsserver 220 zum Bereitstellen eines öffentlichen kryptographischen Schlüssels des ersten Sicherheitselements 110 für das Challenge-Response-Verfahren in dem zweiten Sicherheitselement und/oder in einem Sicherheitsapplets des zweiten Sicherheitselements 112 steuert, beispielsweise gemäß dem Verfahren in Figur 6. Zum Nachweis einer Schreibberechtigung zum Schreiben des öffentlichen kryptographischen Schlüssels des ersten Sicherheitselements 110 in das zweite Sicherheitselement und/oder in das Sicherheitsapplets des zweiten Sicherheitselements 112 verwendet der Provisionierungsserver 220 beispielsweise das Berechtigungszertifikat 226.

Der Service-Provider-Server 260 umfasst einen Prozessor 262, einen Speicher 264 und eine Kommunikationsschnittstelle 270. In dem Speicher 264 sind Programminstruktionen 268 gespeichert, bei deren Ausführung der Prozessor 262 den Service-Provider-Server 260 zum Bereitstellen von Dienstleistungen steuert, welche beispielsweise von dem mobilen Endgerät 100 über das Netzwerk 170 angefragt und/oder genutzt werden können. Eine Inanspruchnahme von Dienstleistungen des Service-Provider-Server 260 setzt beispielsweise ein Bereitstellen und/oder Nachweis eines oder mehrerer Identitätsattribute des Nutzers voraus. Auf eine Anfrage einer Dienstleistung des Service-Provider-Servers 260 durch das mobile Endgerät 100 sendet das Service-Provider-Servers 260 eine Identitätsattributsanfrage nach Identitätsattributen des Nutzers des mobilen Endgeräts 100 an einen ID-Provider-Server 240. Die Identitätsattributsanfrage kann von dem Service-Provider-Servers 260 beispielsweise direkt oder über das mobile Endgerät 100 an den ID-Provider-Server 240 gesendet werden.

Der ID-Provider-Server 240 umfasst einen Prozessor 242, einen Speicher 244 und eine Kommunikationsschnittstelle 250. In dem Speicher 244 sind Programminstruktionen 248 gespeichert, bei deren Ausführung der Prozessor 242 den Service-Provider-Server 240 zum Auslesen der in der Identitätsattributsanfrage spezifizierten Identitätsattribute aus einem Speicher des mobilen Endgeräts 100. Hierzu baut der ID-Provider-Server 240 einen kryptographisch gesicherten Kommunikationskanal mit dem mobilen Endgerät 100 auf. Bei dem einen kryptographisch gesicherten Kommunikationskanal kann es sich beispielsweise um einen Ende-zu-Ende-verschlüsselten Kommunikationskanal handeln. Beispielsweise setzt dies eine gegenseitiges Authentifizieren von ID-Provider-Server 240 und mobilem Endgerät 100 voraus. Für einen Lesezugriff auf die Identitätsattribute verwendet der ID-Provider-Server 240 ein ID-Anwendungsprogramm 108 auf dem mobilen Endgerät 100, welches die Identitätsattribute verwaltet. Eine Leseberechtigung zum Auslesen der in der Identitätsattributsanfrage spezifizierten Identitätsattribute weist der ID-Provider-Server 240 beispielsweise mit dem Berechtigungszertifikat 248 nach. Ferner setzt ein Lesezugriff des ID-Provider-Server 240 auf die in der Identitätsattributsanfrage spezifizierten Identitätsattribute eine Zustimmung des Nutzers des mobilen Endgeräts 100 voraus. Hierzu muss sich der Nutzer gegenüber dem ID-Anwendungsprogramm 108 erfolgreich authentisieren, beispielsweise unter Verwendung des Verfahrens der Figuren 3 und 4. Beispielsweise wird dem Nutzer über eine Anzeigevorrichtung der Nutzerschnittstelle 116 angezeigt, welche Identitätsattribut an den ID-Provider-Server 240 gesendet werden sollen, und dem Nutzer ermöglicht diese Auswahl zu bearbeiten. Beispielsweise kann der Nutzer selektieren, welche der angefragten Identitätsattribute tatsächlich gesendet werden. Auf einen erfolgreichen Nachweis der Leseberechtigung und eine erfolgreiche Nutzerauthentifizierung werden dem ID-Provider-Server 240 die freigegebenen Identitätsattribute zugesendet. Der ID-Provider-Server 240 signiert die empfangenen Identitätsattribute und sendet diese an den Service-Provider-Server 260.

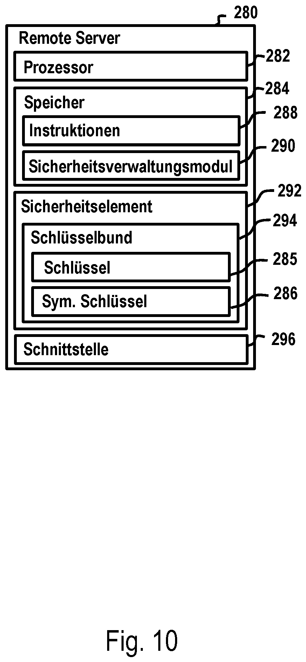

Figur 10 zeigt einen exemplarischen externen Server 280, welcher ein entferntes zweites Sicherheitselement 292 zur Nutzung für ein mobiles Endgerät bzw. für eine von einer Applikation des mobilen Endgeräts verwaltete elektronische Identität über ein Netzwerk bereitstellt. Der Server 280 umfasst beispielsweise ferner einen Prozessor 282, einen Speicher 284 und eine Kommunikationsschnittstelle 296. In dem Speicher 284 sind Programminstruktionen 288 gespeichert zum Auslesen von auf dem mobilen Endgerät gespeicherten Identitätsattribute, welche die Applikation verwaltet. Die auszulesenden Identitätsattribute werden einem auslesenden Computersystem zur Verfügung gestellt. Bei Ausführung der Programminstruktionen 288 steuert der Prozessor 202 den Sicherheitsverwaltungsdienstserver 240 beispielsweise zum Empfangen der auszulesenden Identitätsattribute von der Applikation unter Verwendung der Kommunikationsschnittstelle 296. Die Identitätsattribute sind unter Verwendung eines der elektronischen Identität zugeordneten kryptographischen Schlüssels verschlüsselt. Das Sicherheitselement 292 verfügt über einen kryptographischen Schlüssel 285 zum Entschlüsseln der Identitätsattribute. Im Falle einer symmetrischen Verschlüsslung handelt es sich bei dem kryptographischen Schlüssel 285 beispielsweise um den entsprechenden symmetrischen Schlüssel. Im Falle einer asymmetrischen Verschlüsslung sind die Identitätsattribute beispielsweise mit einem öffentlichen kryptographischen Schlüssel verschlüsselt, dessen zugehöriger privater kryptographischen Schlüssel als der kryptographische Schlüssel 285 in dem entfernten Sicherheitselement 292 gespeichert ist. Das entfernte Sicherheitselement 292 entschlüsselt die auszulesenden Identitätsattribute unter Verwendung kryptographischen Schlüssels 285. Ferner verschlüsselt das entfernte Sicherheitselement 292 die entschlüsselten auszulesenden Identitätsattribute unter Verwendung eines in dem entfernten Sicherheitselement 292 gespeicherten ephemeren symmetrischen kryptographischen Schlüssels 286. Diesen ephemeren symmetrischen kryptographischen Schlüssels 286 teilt sich das entfernte Sicherheitselement 292 beispielsweise mit dem auslesenden Computersystem zur Kommunikationsverschlüsselung. Schließlich sendet der Server 280 die verschlüsselten auszulesenden Identitätsattribute an das auszulesende Computersystem unter Verwendung der Kommunikationsschnittstelle 296. Beispielsweise sendet der Server 280 die verschlüsselten auszulesenden Identitätsattribute an das mobile Endgerät zum Weiterleiten an das auszulesende Computersystem.

Das entfernte Sicherheitselement 292 umfasst beispielsweise einen der Applikation und/oder der elektronischen Identität zugeordneten Schlüsselbund 294. Der Schlüsselbund 294 stellt der Applikation 108 für die von ihr verwaltete elektronische Identität identitätsindividuelle kryptographische Schlüssel zur Verfügung zu stellen. Ferner umfassen das entfernte Sicherheitselement 292 beispielsweise weitere kryptographische Mittel, wie etwa kryptographische Funktionen und/oder kryptographische Protokolle, welche das entfernte Sicherheitselement der Applikation bzw. der elektronischen Identität zur Nutzung zur Verfügung stellt. Der Schlüsselbund 294 wird beispielsweise mittels eines Key Stores bzw. Schlüsselspeichers zum Speichern von kryptographischen Schlüsseln für die individuellen elektronischen Identität bereitgestellt, wie etwa symmetrische, öffentliche und/oder private kryptographischer Schlüssel, und von Zertifikaten, wie beispielsweise Public-Key-Zertifikaten und/oder Attributzertifikaten. Die von dem entfernten Sicherheitselement 292 bereitgestellten kryptographischen Mittel versetzten die Applikation 108 unter Verwendung des Schlüsselbunds 294 mit den identitätsindividuellen kryptographischen Schlüsseln beispielsweise dazu in die Lage, Daten für die von der Applikation 108 verwalteten elektronischen Identität zu verschlüsseln und/oder zu entschlüsseln, sowie Signaturen zu erstellen und/oder zu prüfen. Beispielsweise versetzen die von dem entfernten Sicherheitselement 292 bereitgestellten kryptographischen Mittel die Applikation 108 dazu in die Lage für die von ihr verwaltete elektronische Identität ein Challenge Response-Verfahren auszuführen bzw. an diesem teilzunehmen. Insbesondere umfassen die kryptographischen Mittel die Applikation 108 beispielsweise einen öffentlichen kryptographischen Schlüssel des ersten Sicherheitselements des mobilen Endgeräts. Das Sicherheitselemente 292 kann beispielsweise als ein Hardware-Sicherheitsmodul implementiert sein. Ein Hardware-Sicherheitsmodul bezeichnet ein internes oder externes Peripheriegerät, welches eine effiziente und sichere Ausführung kryptographischer Operationen und/oder Applikationen ermöglicht. Von dem Sicherheitsmodul verwendete kryptographischen Schlüssel sind auf diesem beispielsweise sowohl softwaretechnisch als auch gegen physische Angriffe oder Seitenkanalangriffe geschützt gespeichert.

Beispielsweise umfasst der Server 280 ferner ein Sicherheitsverwaltungsprogrammmodul 290 eines das Sicherheitselement 292 verwaltenden Sicherheitsverwaltungsdienstes. Beispielsweise handelt es sich bei dem Server 280 um einen Server des Sicherheitsverwaltungsdienstes oder um einen eigenständigen Server. Der Sicherheitsverwaltungsdienst stellt beispielsweise das Applet 294 zum Installieren in dem Sicherheitselement 294 bereit. Beispielsweise umfasst der Server 280 eine Mehrzahl von Sicherheitselementen 292, welche jeweils von einem individuellen Sicherheitsverwaltungsdienst verwaltet werde. Für jedes der Sicherheitselemente 292 ist beispielsweise ein Sicherheitsverwaltungsprogrammmodul 290 auf dem Server 280 installiert. Beispielsweise umfasst der Server 280 genau ein Sicherheitselementen 292 oder ausschließlich Sicherheitselemente 292, welche von demselben Sicherheitsverwaltungsdienst verwaltet werden. Beispielsweise wird eine Mehrzahl von Server 280 bereitgestellt, welche unterschiedlichen Sicherheitsverwaltungsdiensten zugeordnet sind und ausschließlich Sicherheitselemente 292 umfassten, welche von demselben Sicherheitsverwaltungsdienst verwaltet werden, welchem der entsprechende Server 280 zugeordnet ist.

### Bezugszeichenliste

- 100: mobiles Endgerät
- 102: Prozessor
- 104: Speicher
- 106: Betriebssystem
- 108: Anwendungsprogramm
- 109: ID-Client
- 110: erstes Sicherheitselement
- 111: ID-Verwaltungsmodul
- 112: zweites Sicherheitselement
- 113: ID-Profil
- 114: Sicherheitsapplet
- 116: Nutzerschnittstelle
- 118: Authentifizierungssensor
- 120: Kommunikationsschnittstelle
- 150: Netzwerk
- 170: System
- 200: Initialisierungsserver
- 201: Initialisierungsserver
- 202: Prozessor
- 204: Speicher
- 206: Berechtigungszertifikat
- 208: Programminstruktionen
- 210: Kommunikationsschnittstelle
- 220: Provisionierungsserver
- 222: Prozessor
- 224: Speicher
- 226: Berechtigungszertifikat
- 228: Programminstruktionen
- 230: Kommunikationsschnittstelle
- 240: ID-Provider-Server
- 242: Prozessor
- 244: Speicher
- 246: Berechtigungszertifikat
- 248: Programminstruktionen
- 250: Kommunikationsschnittstelle
- 260: Service-Provider-Server
- 262: Prozessor
- 264: Speicher
- 266: Programminstruktionen
- 270: Kommunikationsschnittstelle
- 280: Server
- 282: Prozessor
- 284: Speicher
- 285: kryptographischer Schlüssel
- 286: symmetrischer Schlüssel
- 288: Programminstruktionen
- 290: Sicherheitsverwaltungsprogrammmodul
- 292: Sicherheitselement
- 294: Schlüsselbund
- 296: Kommunikationsschnittstelle

## Patentansprüche

1. Verfahren zum Authentifizieren eines Nutzers gegenüber einem auf einem mobilen Endgerät (100) installierten Anwendungsprogramm (108), wobei auf dem Endgerät (100) ein Betriebssystem (106) installiert ist, wobei das Betriebssystem (106) dazu konfiguriert ist zumindest einen Authentifizierungssensor (118) des Endgeräts (100) zum Erfassen zumindest eines Authentifizierungsfaktors des Nutzers zu steuern, wobei das Endgerät (100) ein dem Betriebssystem (106) zugeordnetes erstes Sicherheitselement (110) umfasst, wobei das erste Sicherheitselement (110) kryptographische Mittel zum Ausführen eines Challenge-Response-Verfahrens umfasst, wobei in einem geschützten Speicherbereich des ersten Sicherheitselements (110) ein privater kryptographischer Schlüssel eines asymmetrischen Schlüsselpaars des ersten Sicherheitselements (110) gespeichert ist,
wobei ferner ein von dem ersten Sicherheitselement (110) unabhängiges dem Anwendungsprogramm (108) zugeordnetes Sicherheitselement (112) bereitgestellt wird, wobei das zweite Sicherheitselement (112) kryptographische Mittel zum Ausführen eines Challenge-Response-Verfahrens umfasst,
wobei das Verfahren umfasst:
• auf eine Authentifizierungsanfrage des Anwendungsprogramms (108) hin, Authentifizieren des Nutzers durch das Betriebssystem (106) unter Verwendung des Authentifizierungssensors (118) und des ersten Sicherheitselements (110),
• Ausführen eines Challenge-Response-Verfahrens zwischen dem ersten Sicherheitselement (110) und dem zweiten Sicherheitselement (112), wobei das Challenge-Response-Verfahren ein Erzeugen einer Response durch das ersten Sicherheitselement (110) und ein Validieren der Response durch das zweite Sicherheitselement (112) umfasst, wobei das Erzeugen der Response ein Verschlüsseln einer Challenge des zweiten Sicherheitselements durch das erste Sicherheitselement (110) unter Verwendung des privaten kryptographischen Schlüssels des ersten Sicherheitselements (110) umfasst und wobei das Validieren der Response ein Entschlüsseln der Response des ersten Sicherheitselements (110) durch das zweite Sicherheitselement (112) unter Verwendung eines öffentlichen kryptographischen Schlüssels des asymmetrischen Schlüsselpaars des ersten Sicherheitselements (110) umfasst, wobei ein erfolgreiches Ausführen des Challenge-Response-Verfahrens eine erfolgreiche Authentifizierung des Nutzers durch das Betriebssystem (106) bestätigt,
• auf ein erfolgreiches Ausführen des Challenge-Response-Verfahrens hin, Bestätigen der erfolgreichen Authentifizierung des Nutzers gegenüber dem Anwendungsprogramm (108) durch das zweite Sicherheitselement (112),
**gekennzeichnet durch**
das Verfahren ferner ein Bereitstellen des asymmetrischen Schlüsselpaars des ersten Sicherheitselements (110) umfasst,
wobei das Bereitstellen des asymmetrischen Schlüsselpaars des ersten Sicherheitselements (110) umfasst:
• Erzeugen des asymmetrischen Schlüsselpaars durch das erste Sicherheitselement (110),
• Übertragen des öffentlichen kryptographischen Schlüssels des asymmetrischen Schlüsselpaars des ersten Sicherheitselements (110) an das zweite Sicherheitselements (112),
wobei das mobile Endgerät (100) eine Kommunikationsschnittstelle (120) zur Kommunikation über ein Netzwerk (150) umfasst, wobei das Übertragen des öffentlichen kryptographischen Schlüssels des asymmetrischen Schlüsselpaars des ersten Sicherheitselements (110) umfasst:
• Senden des öffentlichen kryptographischen Schlüssels des asymmetrischen Schlüsselpaars des ersten Sicherheitselements (110) von dem ersten Sicherheitselement (110) an das Anwendungsprogramm (108),
• Weiterleiten des öffentlichen kryptographischen Schlüssels des asymmetrischen Schlüsselpaars des ersten Sicherheitselements (110) von dem Anwendungsprogramm (108) unter Verwendung der Kommunikationsschnittstelle (120) über das Netzwerk (150) an einen externen Provisionierungsserver (220), welcher über eine Schreibberechtigung zum Schreiben in einen Speicherbereich des zweiten Sicherheitselements (112) verfügt,
• Validieren der Schreibberechtigung des Provisionierungsservers (220) zum Schreiben in den Speicherbereich des zweiten Sicherheitselements (112),
• auf ein erfolgreiches Validieren der Schreibberechtigung des Provisionierungsservers (220), Gewähren eines Schreibzugriffs des externen Provisionierungsservers (220) über die Kommunikationsschnittstelle (120) auf den Speicherbereich des zweiten Sicherheitselements (112),
• Schreiben des öffentlichen kryptographischen Schlüssels des asymmetrischen Schlüsselpaars des ersten Sicherheitselements (110) in den Speicherbereich des zweiten Sicherheitselements (112).

2. Verfahren nach Anspruch 1, wobei das zweite Sicherheitselement (112) ein Zertifikat umfasst, welches den öffentlichen kryptographischen Schlüssel des asymmetrischen Schlüsselpaars des ersten Sicherheitselements (110) umfasst.

3. Verfahren nach Anspruch 2, wobei es sich bei dem Zertifikat um ein Zertifikat einer Public Key Infrastructure handelt.

4. Verfahren nach einem der voranstehenden Ansprüche, wobei das Endgerät (100) das zweite Sicherheitselement (112) umfasst, oder
wobei das zweite Sicherheitselement (112) von einem externen Server (280) bereitgestellt wird.

5. Verfahren nach einem der voranstehenden Ansprüche, wobei das zweite Sicherheitselement (112) ein dem Anwendungsprogramm (108) zugeordnetes Sicherheitsapplet (114) umfasst,
wobei das Sicherheitsapplet (114) die kryptographische Mittel zum Ausführen eines Challenge-Response-Verfahrens umfasst,
wobei das Bestätigen der erfolgreichen Authentifizierung des Nutzers gegenüber dem Anwendungsprogramm (108) durch das Sicherheitsapplet (114) erfolgt.

6. Verfahren nach einem der voranstehenden Ansprüche, wobei eine Kommunikation im Zuge des Challenge-Response-Verfahrens zwischen dem ersten Sicherheitselement (110) und dem zweiten Sicherheitselement (112) über das Anwendungsprogramm (108) erfolgt.

7. Verfahren nach Anspruch 6, wobei das Challenge-Response-Verfahren umfasst:
• Senden der Challenge des zweiten Sicherheitselements (112) an das Anwendungsprogramm (108),
• Weiterleiten der Challenge von dem Anwendungsprogramm (108) an das erste Sicherheitselement (110),
• auf eine erfolgreiche Authentifizierung des Nutzers durch das Betriebssystem (106) hin, Erzeugen der Response durch das erste Sicherheitselement (110),
• Senden der Response von dem ersten Sicherheitselement (110) an das Anwendungsprogramm (108),
• Weiterleiten der Response von dem Anwendungsprogramm (108) an das zweite Sicherheitselement (112)),
• Validieren der entschlüsselten Response durch das zweite Sicherheitselement (112).

8. Verfahren nach einem der voranstehenden Ansprüche, wobei die Authentifizierungsanfrage die Challenge umfasst und das Erzeugen der Response auf die erfolgreiche Authentifizierung des Nutzers hin erfolgt, und/oder
wobei das Authentifizieren des Nutzers umfasst:
• Erfassen zumindest eines Authentifizierungsfaktors des Nutzers unter Verwendung des Authentifizierungssensor (118),
• Validieren des erfassten Authentifizierungsfaktors unter Verwendung des ersten Sicherheitselements (110), und/oder
wobei das Bestätigen der erfolgreichen Authentifizierung des Nutzers ein Senden einer Authentifizierungsbestätigung des zweiten Sicherheitselements (112) an das Anwendungsprogramm (108) auf eine erfolgreiche Validierung der Response hin umfasst.

9. Verfahren nach einem der voranstehenden Ansprüche, wobei es sich bei dem Anwendungsprogramm (108) um ein ID-Anwendungsprogramm handelt, welches dazu konfiguriert ist ein oder mehrere dem Nutzer zugeordnete Identitätsattribute zu verwalten.

10. Verfahren nach Anspruch 9, wobei das ID-Anwendungsprogramm konfiguriert ist, ein oder mehrere der Identitätsattribute des Nutzers an ein weiteres Endgerät (100) zu senden oder
wobei das ID-Anwendungsprogramm konfiguriert ist, ein oder mehrere der Identitätsattribute des Nutzers unter Verwendung der Kommunikationsschnittstelle (120) über ein Netzwerk (150) an einen ID-Provider-Server (240) zum Bereitstellen für einen Service-Provider-Server (260) und/oder zur Bestätigung gegenüber dem Service-Provider-Server (260) zu senden.

11. Verfahren nach einem der Ansprüche 9 bis 10, wobei das ID-Anwendungsprogramm ein ID-Verwaltungsmodul (111) umfasst, welches eine Mehrzahl von ID-Profilen (113) verwaltet, wobei jedem der ID-Profile (113) jeweils ein unabhängiges Sicherheitsapplet (114) in dem zweiten Sicherheitselement (112) zugeordnet ist.

12. Verfahren nach Anspruch 11, wobei jedem der ID-Profile (113) jeweils ein Satz von ein oder mehreren Identitätsattributen zugeordnet ist.

13. System (170), wobei das System (170) ein mobiles Endgerät (100) zum Authentifizieren eines Nutzers gegenüber einem auf einem mobilen Endgerät (100) installierten Anwendungsprogramm (108) umfasst, wobei das mobile Endgerät (100) einen Prozessor (102) umfasst, wobei auf dem Endgerät (100) ein Betriebssystem (106) installiert ist, wobei das Betriebssystem (106) dazu konfiguriert ist zumindest einen Authentifizierungssensor (118) des Endgeräts (100) zum Erfassen zumindest eines Authentifizierungsfaktors des Nutzers zu steuern, wobei das Endgerät (100) ein dem Betriebssystem (106) zugeordnetes erstes Sicherheitselement (110) umfasst, wobei das erste Sicherheitselement (110) kryptographische Mittel zum Ausführen eines Challenge-Response-Verfahrens umfasst, wobei in einem geschützten Speicherbereich des ersten Sicherheitselements (110) ein privater kryptographischer Schlüssel eines asymmetrischen Schlüsselpaars des ersten Sicherheitselements (110) gespeichert ist,
wobei das System (170) ferner ein von dem ersten Sicherheitselement (110) unabhängiges zweites Sicherheitselement (112) umfasst, wobei das zweite Sicherheitselement (112) kryptographische Mittel zum Ausführen eines Challenge-Response-Verfahrens umfasst,
wobei der Prozessor (102) dazu konfiguriert ist ein Verfahren zum Authentifizieren eines Nutzers gegenüber einem auf einem mobilen Endgerät (100) installierten Anwendungsprogramm (108) auszuführen, welches umfasst:
• auf eine Authentifizierungsanfrage des Anwendungsprogramms (108) hin, Authentifizieren des Nutzers durch das Betriebssystem (106) unter Verwendung des Authentifizierungssensors (118) und des ersten Sicherheitselements (110),
• Ausführen eines Challenge-Response-Verfahrens zwischen dem ersten Sicherheitselement (110) und dem zweiten Sicherheitselement (112), wobei das Challenge-Response-Verfahren ein Erzeugen einer Response durch das ersten Sicherheitselement (110) zum Validieren durch das zweite Sicherheitselement (112) umfasst, wobei das Erzeugen der Response ein Verschlüsseln einer Challenge des zweiten Sicherheitselements durch das erste Sicherheitselement (110) unter Verwendung des privaten kryptographischen Schlüssels des ersten Sicherheitselements (110) umfasst zum Validieren durch ein Entschlüsseln der Response des ersten Sicherheitselements (110) durch das zweite Sicherheitselement (112) unter Verwendung eines öffentlichen kryptographischen Schlüssels des asymmetrischen Schlüsselpaars des ersten Sicherheitselements (110), wobei ein erfolgreiches Ausführen des Challenge-Response-Verfahrens eine erfolgreiche Authentifizierung des Nutzers durch das Betriebssystem (106) bestätigt,
• auf ein erfolgreiches Ausführen des Challenge-Response-Verfahrens hin, Bestätigen der erfolgreichen Authentifizierung des Nutzers gegenüber dem Anwendungsprogramm (108) durch das zweite Sicherheitselement (112),
**gekennzeichnet durch**
das Verfahren ferner ein Bereitstellen des asymmetrischen Schlüsselpaars des ersten Sicherheitselements (110) umfasst,
wobei das Bereitstellen des asymmetrischen Schlüsselpaars des ersten Sicherheitselements (110) umfasst:
• Erzeugen des asymmetrischen Schlüsselpaars durch das erste Sicherheitselement (110),
• Übertragen des öffentlichen kryptographischen Schlüssels des asymmetrischen Schlüsselpaars des ersten Sicherheitselements (110) an das zweite Sicherheitselements (112),
wobei das mobile Endgerät (100) eine Kommunikationsschnittstelle (120) zur Kommunikation über ein Netzwerk (150) umfasst, wobei das Übertragen des öffentlichen kryptographischen Schlüssels des asymmetrischen Schlüsselpaars des ersten Sicherheitselements (110) umfasst:
• Senden des öffentlichen kryptographischen Schlüssels des asymmetrischen Schlüsselpaars des ersten Sicherheitselements (110) von dem ersten Sicherheitselement (110) an das Anwendungsprogramm (108),
• Weiterleiten des öffentlichen kryptographischen Schlüssels des asymmetrischen Schlüsselpaars des ersten Sicherheitselements (110) von dem Anwendungsprogramm (108) unter Verwendung der Kommunikationsschnittstelle (120) über das Netzwerk (150) an einen externen Provisionierungsserver (220), welcher über eine Schreibberechtigung zum Schreiben in einen Speicherbereich des zweiten Sicherheitselements (112) verfügt,
• Validieren der Schreibberechtigung des Provisionierungsservers (220) zum Schreiben in den Speicherbereich des zweiten Sicherheitselements (112),
• auf ein erfolgreiches Validieren der Schreibberechtigung des Provisionierungsservers (220), Gewähren eines Schreibzugriffs des externen Provisionierungsservers (220) über die Kommunikationsschnittstelle (120) auf den Speicherbereich des zweiten Sicherheitselements (112),
• Schreiben des öffentlichen kryptographischen Schlüssels des asymmetrischen Schlüsselpaars des ersten Sicherheitselements (110) in den Speicherbereich des zweiten Sicherheitselements (112).

14. System (170) nach Anspruch 13, wobei das Endgerät (100) das zweite Sicherheitselement (112) umfasst oder
wobei das Endgerät (100) eine Kommunikationsschnittstelle (120) zur Kommunikation über ein Netzwerk (150) umfasst, wobei das System (170) ferner einen Server (280) umfasst, welcher das zweite Sicherheitselement (112) bereitstellt.

15. System (170) nach einem der Ansprüche 13 bis 14, wobei das System ferner einen Initialisierungsserver (200) umfasst, wobei der Initialisierungsserver (200) zum Initialisieren des ersten Sicherheitselement (110) konfiguriert ist und eine Schreibberechtigung zum Initialisieren des ersten Sicherheitselements (112) umfasst, wobei das Initialisieren umfasst:
• Erzeugen des asymmetrischen Schlüsselpaars des ersten Sicherheitselements (110) durch das erste Sicherheitselement (110),
• Validieren der Schreibberechtigung des Initialisierungsservers (200) zum Initialisieren des zweiten Sicherheitselements (112),
• auf ein erfolgreiches Validieren der Schreibberechtigung des Initialisierungsservers (200), Gewähren eines Schreibzugriffs des externen Initialisierungsservers (200) über die Kommunikationsschnittstelle (120) auf das zweite Sicherheitselement (112),
• Initialisieren des ersten Sicherheitselements (112),
• Schreiben des asymmetrischen Schlüsselpaars des ersten Sicherheitselements (110) in den initialisierten Speicherbereich, und/oder
wobei das System ferner einen Provisionierungsserver (220) umfasst, wobei der Provisionierungsserver (220) zum Provisionieren des zweiten Sicherheitselements (112) konfiguriert ist und eine Schreibberechtigung zum Schreiben in einen Speicherbereich des zweiten Sicherheitselements (112) umfasst, wobei das Provisionieren umfasst:
• Empfangen eines öffentlichen kryptographischen Schlüssels des asymmetrischen Schlüsselpaars des ersten Sicherheitselements (110),
• Validieren der Schreibberechtigung des Provisionierungsservers (220) zum Schreiben in den Speicherbereich des zweiten Sicherheitselements (112),
• auf ein erfolgreiches Validieren der Schreibberechtigung des Provisionierungsservers (220), gewähren eines Schreibzugriffs des externen Provisionierungsservers (220) über die Kommunikationsschnittstelle (120) auf den Speicherbereich des zweiten Sicherheitselements (112),
• Schreiben des öffentlichen kryptographischen Schlüssels des asymmetrischen Schlüsselpaars des ersten Sicherheitselements (110) in den Speicherbereich des zweiten Sicherheitselements (112), und/oder
wobei das System ferner einen ID-Provider-Server (240) umfasst, wobei es sich bei dem Anwendungsprogramm (108) um ein ID-Anwendungsprogramm handelt, welches dazu konfiguriert ist ein oder mehrere in dem mobilen Endgerät (100) gespeicherte und dem Nutzer zugeordnete Identitätsattribute zu verwalten, wobei der ID-Provider-Server (240) zum Bereitstellen und/oder Bestätigen von ein oder mehreren der Identitätsattribute des Nutzers für einen Service-Provider-Server (260) konfiguriert ist und eine Leseberechtigung zum Lesen ein oder mehrere der Identitätsattribute des Nutzers umfasst, das Bereitstellen und/oder Bestätigen von ein oder mehreren der Identitätsattribute des Nutzers für einen Service-Provider-Server (260) umfasst:
• Validieren der Leseberechtigung des ID-Provider-Server (240) zum Lesen ein oder mehrere der Identitätsattribute des Nutzers,
• auf ein erfolgreiches Validieren der Leseberechtigung, Senden ein oder mehrere der Identitätsattribute des Nutzers an den ID-Provider-Server (240),
• Signieren der gesendeten ein oder mehrere der Identitätsattribute des Nutzers durch den ID-Provider-Server (240),
• Senden der signierten ein oder mehrere der Identitätsattribute des Nutzers an den Service-Provider-Server (260).

## Claims

1. A method for authenticating a user with respect to an application program (108) installed on a mobile terminal device (100), wherein an operating system (106) is installed on the terminal device (100), wherein the operating system (106) is configured to control at least one authentication sensor (118) of the terminal device (100) for detecting at least one authentication factor of the user, wherein the terminal device (100) comprises a first security element (110) associated with the operating system (106), wherein the first security element (110) comprises cryptographic means for executing a challenge-response method, wherein a private cryptographic key of an asymmetric key pair of the first security element (110) is stored in a protected memory area of the first security element (110),
wherein a security element (112) independent of the first security element (110) and associated with the application program (108) is further provided, wherein the second security element (112) comprises cryptographic means for executing a challenge-response method,
wherein the method comprises:
• in response to an authentication request from the application program (108), authenticating the user by the operating system (106) using the authentication sensor (118) and the first security element (110),
• performing a challenge-response method between the first security element (110) and the second security element (112), wherein the challenge-response method comprises generating a response by the first security element (110) and validating the response by the second security element (112), wherein generating the response comprises encrypting a challenge of the second security element by the first security element (110) using the private cryptographic key of the first security element (110), and wherein validating the response comprises decrypting the response of the first security element (110) by the second security element (112) using a public cryptographic key of the asymmetric key pair of the first security element (110), wherein a successful execution of the challenge-response method confirms a successful authentication of the user by the operating system (106),
• upon successful execution of the challenge-response method, confirming successful authentication of the user to the application program (108) by the second security element (112),
**characterised in that**
the method further comprises providing the asymmetric key pair of the first security element (110),
wherein providing the asymmetric key pair of the first security element (110) comprises:
• generating the asymmetric key pair by the first security element (110),
• transmitting the public cryptographic key of the asymmetric key pair of the first security element (110) to the second security element (112),
wherein the mobile terminal device (100) comprises a communication interface (120) for communicating via a network (150), wherein transmitting the public cryptographic key of the asymmetric key pair of the first security element (110) comprises:
• sending the public cryptographic key of the asymmetric key pair of the first security element (110) from the first security element (110) to the application program (108),
• forwarding the public cryptographic key of the asymmetric key pair of the first security element (110) from the application program (108) using the communication interface (120) via the network (150) to an external provisioning server (220) which has write authorisation for writing to a memory area of the second security element (112),
• validating the write authorisation of the provisioning server (220) for writing to the memory area of the second security element (112),
• upon successful validation of the write authorisation of the provisioning server (220), granting write access of the external provisioning server (220) via the communication interface (120) to the memory area of the second security element (112),
• writing the public cryptographic key of the asymmetric key pair of the first security element (110) into the memory area of the second security element (112).

2. The method according to claim 1, wherein the second security element (112) comprises a certificate comprising the public cryptographic key of the asymmetric key pair of the first security element (110).

3. The method according to claim 2, wherein the certificate is a certificate of a public key infrastructure.

4. The method according to any one of the preceding claims, wherein the terminal device (100) comprises the second security element (112), or
wherein the second security element (112) is provided by an external server (280).

5. The method according to any one of the preceding claims, wherein the second security element (112) comprises a security applet (114) associated with the application program (108),
wherein the security applet (114) comprises the cryptographic means for executing a challenge-response method,
wherein the confirmation of the successful authentication of the user to the application program (108) is performed by the security applet (114).

6. The method according to any one of the preceding claims, wherein a communication in the course of the challenge-response method between the first security element (110) and the second security element (112) takes place via the application program (108).

7. The method according to claim 6, wherein the challenge-response method comprises:
• sending the challenge of the second security element (112) to the application program (108),
• forwarding the challenge from the application program (108) to the first security element (110),
• upon successful authentication of the user by the operating system (106), generating the response by the first security element (110),
• sending the response from the first security element (110) to the application program (108),
• forwarding the response from the application program (108) to the second security element (112),
• validating the decrypted response by the second security element (112).

8. The method according to any one of the preceding claims, wherein the authentication request comprises the challenge and the response is generated upon successful authentication of the user, and/or
wherein the authentication of the user comprises:
• detecting at least one authentication factor of the user using the authentication sensor (118),
• validating the detected authentication factor using the first security element (110), and/or
wherein confirming successful authentication of the user comprises sending an authentication confirmation of the second security element (112) to the application program (108) upon successful validation of the response.

9. The method according to any one of the preceding claims, wherein the application program (108) is an ID application program configured to manage one or more identity attributes associated with the user.

10. The method according to claim 9, wherein the ID application program is configured to send one or more of the identity attributes of the user to a further terminal device (100), or
wherein the ID application program is configured to send one or more of the identity attributes of the user using the communication interface (120) via a network (150) to an ID provider server (240) for providing to a service provider server (260) and/or for confirmation to the service provider server (260) .

11. The method according to any one of claims 9 to 10, wherein the ID application program comprises an ID management module (111) that manages a plurality of ID profiles (113), wherein each of the ID profiles (113) is associated with an independent security applet (114) in the second security element (112).

12. The method according to claim 11, wherein each of the ID profiles (113) is associated with a set of one or more identity attributes.

13. A system (170), wherein the system (170) comprises a mobile terminal device (100) for authenticating a user to an application program (108) installed on a mobile terminal device (100), wherein the mobile terminal device (100) comprises a processor (102), wherein an operating system (106) is installed on the terminal device (100), wherein the operating system (106) is configured to control at least one authentication sensor (118) of the terminal device (100) for detecting at least one authentication factor of the user, wherein the terminal device (100) comprises a first security element (110) associated with the operating system (106), wherein the first security element (110) comprises cryptographic means for executing a challenge-response method, wherein a private cryptographic key of an asymmetric key pair of the first security element (110) is stored in a protected memory area of the first security element (110),
wherein the system (170) further comprises a second security element (112) independent of the first security element (110), wherein the second security element (112) comprises cryptographic means for executing a challenge-response method,
wherein the processor (102) is configured to execute a method for authenticating a user to an application program (108) installed on a mobile terminal device (100), which method comprises:
• in response to an authentication request from the application program (108), authenticating the user by the operating system (106) using the authentication sensor (118) and the first security element (110),
• performing a challenge-response method between the first security element (110) and the second security element (112), wherein the challenge-response method comprises generating a response by the first security element (110) for validation by the second security element (112), wherein the generation of the response comprises encrypting a challenge of the second security element by the first security element (110) using the private cryptographic key of the first security element (110) for validation by decrypting the response of the first security element (110) by the second security element (112) using a public cryptographic key of the asymmetric key pair of the first security element (110), wherein a successful execution of the challenge-response method confirms a successful authentication of the user by the operating system (106),
• upon successful execution of the challenge-response method, confirming successful authentication of the user to the application program (108) by the second security element (112),
**characterised in that**
the method further comprises providing the asymmetric key pair of the first security element (110),
wherein providing the asymmetric key pair of the first security element (110) comprises:
• generating the asymmetric key pair by the first security element (110),
• transmitting the public cryptographic key of the asymmetric key pair of the first security element (110) to the second security element (112),
wherein the mobile terminal device (100) comprises a communication interface (120) for communicating via a network (150), wherein transmitting the public cryptographic key of the asymmetric key pair of the first security element (110) comprises:
• sending the public cryptographic key of the asymmetric key pair of the first security element (110) from the first security element (110) to the application program (108),
• forwarding the public cryptographic key of the asymmetric key pair of the first security element (110) from the application program (108) using the communication interface (120) via the network (150) to an external provisioning server (220) which has write authorisation for writing to a memory area of the second security element (112),
• validating the write authorisation of the provisioning server (220) for writing to the memory area of the second security element (112),
• upon successful validation of the write authorisation of the provisioning server (220), granting write access of the external provisioning server (220) via the communication interface (120) to the memory area of the second security element (112),
• writing the public cryptographic key of the asymmetric key pair of the first security element (110) into the memory area of the second security element (112).

14. The system (170) according to claim 13, wherein the terminal device (100) comprises the second security element (112), or
wherein the terminal device (100) comprises a communication interface (120) for communicating via a network (150), wherein the system (170) further comprises a server (280) that provides the second security element (112).

15. The system (170) according to any one of claims 13 to 14, wherein the system further comprises an initialisation server (200), wherein the initialisation server (200) is configured to initialise the first security element (110) and comprises a write permission to initialise the first security element (110), wherein the initialising comprises:
• generating the asymmetric key pair of the first security element (110) by the first security element (110),
• validating the write authorisation of the initialisation server (200) for initialising the second security element (112),
• upon successful validation of the write authorisation of the initialisation server (200), granting write access of the external initialisation server (200) via the communication interface (120) to the second security element (112),
• initialising the first security element (110),
• writing the asymmetric key pair of the first security element (110) into the initialised memory area, and/or
wherein the system further comprises a provisioning server (220), wherein the provisioning server (220) is configured to provision the second security element (112) and comprises a write authorisation for writing to a memory area of the second security element (112), wherein the provisioning comprises:
• receiving a public cryptographic key of the asymmetric key pair of the first security element (110),
• validating the write authorisation of the provisioning server (220) for writing to the memory area of the second security element (112),
• upon successful validation of the write authorisation of the provisioning server (220), ensuring write access of the external provisioning server (220) via the communication interface (120) to the memory area of the second security element (112),
• writing the public cryptographic key of the asymmetric key pair of the first security element (110) into the memory area of the second security element (112), and/or
wherein the system further comprises an ID provider server (240), wherein the application program (108) is an ID application program configured to manage one or more identity attributes stored in the mobile terminal device (100) and associated with the user, wherein the ID provider server (240) is configured to provide and/or confirm one or more of the identity attributes of the user for a service provider server (260) and comprises a read authorisation to read one or more of the identity attributes of the user; the providing and/or confirming of one or more of the identity attributes of the user for a service provider server (260) comprises:
• validating the read authorisation of the ID provider server (240) to read one or more of the identity attributes of the user,
• upon successful validation of the read authorisation, sending one or more of the identity attributes of the user to the ID provider server (240),
• signing the sent one or more of the identity attributes of the user by the ID provider server (240),
• sending the signed one or more of the identity attributes of the user to the service provider server (260).

## Revendications

1. Procédé d'authentification d'un utilisateur par rapport à un programme d'application (108) installé sur un dispositif de terminal mobile (100), dans lequel un système
d'exploitation (106) est installé sur le dispositif de terminal (100), dans lequel le système d'exploitation (106) est configuré pour commander au moins un capteur d'authentification (118) du dispositif de terminal (100) afin de détecter au moins un facteur d'authentification de l'utilisateur, dans lequel le dispositif de terminal (100) comprend un premier élément de sécurité (110) associé au système d'exploitation (106), dans lequel le premier élément de sécurité (110) comprend des moyens cryptographiques pour exécuter une méthode de challenge-réponse, dans lequel une clé cryptographique privée d'une paire de clés asymétriques du premier élément de sécurité (110) est stockée dans une zone de mémoire protégée du premier élément de sécurité (110),
dans lequel un élément de sécurité (112) indépendant du premier élément de sécurité (110) et associé au programme d'application (108) est en outre fourni, dans lequel le second élément de sécurité (112) comprend des moyens cryptographiques pour exécuter une méthode challenge-réponse,
dans lequel le procédé comprend les étapes consistant à :
• en réponse à une requête d'authentification du programme d'application (108), authentifier l'utilisateur par le système d'exploitation (106) en utilisant le capteur d'authentification (118) et le premier élément de sécurité (110),
• réaliser une méthode challenge-réponse entre le premier élément de sécurité (110) et le second élément de sécurité (112), dans lequel la méthode challenge-réponse comprend les étapes consistant à faire générer une réponse par le premier élément de sécurité (110) et faire valider la réponse par le second élément de sécurité (112), dans lequel l'étape consistant à faire générer la réponse comprend le chiffrement d'un challenge du second élément de sécurité par le premier élément de sécurité (110) en utilisant la clé cryptographique privée du premier élément de sécurité (110), et dans lequel l'étape consistant à faire valider la réponse comprend le déchiffrage de la réponse du premier élément de sécurité (110) par le second élément de sécurité (112) en utilisant une clé cryptographique publique de la paire de clés asymétriques du premier élément de sécurité (110), dans lequel une exécution réussie de la méthode challenge-réponse confirme une authentification réussie de l'utilisateur par le système d'exploitation (106),
• en cas d'exécution réussie de la méthode challenge-réponse, confirmer l'authentification réussie de l'utilisateur au programme d'application (108) par le second élément de sécurité (112),
**caractérisé en ce que**
le procédé comprend en outre l'étape consistant à fournir la paire de clés asymétriques du premier élément de sécurité (110),
dans lequel l'étape consistant à fournir la paire de clés asymétriques du premier élément de sécurité (110) comprend les étapes consistant à :
• faire générer la paire de clés asymétriques par le premier élément de sécurité (110),
• transmettre la clé cryptographique publique de la paire de clés asymétriques du premier élément de sécurité (110) au second élément de sécurité (112),
dans lequel le dispositif de terminal mobile (100) comprend une interface de communication (120) pour communiquer par le biais d'un réseau (150), dans lequel l'étape consistant à transmettre la clé cryptographique publique de la paire de clés asymétriques du premier élément de sécurité (110) comprend les étapes consistant à :
• envoyer la clé cryptographique publique de la paire de clés asymétriques du premier élément de sécurité (110) du premier élément de sécurité (110) au programme d'application (108),
• transférer la clé cryptographique publique de la paire de clés asymétriques du premier élément de sécurité (110) depuis le programme d'application (108) en utilisant l'interface de communication (120) par le biais du réseau (150) jusqu'à un serveur de provisionnement externe (220) qui a une autorisation en écriture pour écrire dans une zone de mémoire du second élément de sécurité (112),
• valider l'autorisation en écriture du serveur de provisionnement (220) pour écrire dans la zone de mémoire du second élément de sécurité (112),
• en cas de validation réussie de l'autorisation en écriture du serveur de provisionnement (220), accorder un accès en écriture du serveur de provisionnement externe (220) par le biais de l'interface de communication (120) à la zone de mémoire du second élément de sécurité (112),
• écrire la clé cryptographique publique de la paire de clés asymétriques du premier élément de sécurité (110) dans la zone de mémoire du second élément de sécurité (112).

2. Procédé selon la revendication 1, dans lequel le second élément de sécurité (112) comprend un certificat comprenant la clé cryptographique publique de la paire de clés asymétriques du premier élément de sécurité (110).

3. Procédé selon la revendication 2, dans lequel le certificat est un certificat d'une infrastructure de clés publiques.

4. Procédé selon l'une quelconque des revendications précédentes, dans lequel le dispositif de terminal (100) comprend le second élément de sécurité (112), ou
dans lequel le second élément de sécurité (112) est fourni par un serveur externe (280).

5. Procédé selon l'une quelconque des revendications précédentes, dans lequel le second élément de sécurité (112) comprend un applet de sécurité (114) associé au programme d'application (108),
dans lequel l'applet de sécurité (114) comprend les moyens cryptographiques pour exécuter une méthode challenge-réponse,
dans lequel la confirmation de l'authentification réussie de l'utilisateur dans le programme d'application (108) est réalisée par l'applet de sécurité (114).

6. Procédé selon l'une quelconque des revendications précédentes, dans lequel une communication au cours de la méthode de challenge-réponse entre le premier élément de sécurité (110) et le second élément de sécurité (112) se déroule par le biais du programme d'application (108).

7. Procédé selon la revendication 6, dans lequel la méthode challenge-réponse comprend les étapes consistant à :
• envoyer le challenge du second élément de sécurité (112) au programme d'application (108),
• transférer le challenge depuis le programme d'application (108) au premier élément de sécurité (110),
• en cas d'authentification réussie de l'utilisateur par le système d'exploitation (106), faire générer la réponse par le premier élément de sécurité (110),
• envoyer la réponse du premier élément de sécurité (110) au programme d'application (108),
• transférer la réponse depuis le programme d'application (108) au second élément de sécurité (112),
• faire valider la réponse déchiffrée par le second élément de sécurité (112).

8. Procédé selon l'une quelconque des revendications précédentes, dans lequel la requête d'authentification comprenant le challenge et la réponse est générée en cas d'authentification réussie de l'utilisateur, et/ou
dans lequel l'authentification de l'utilisateur comprend les étapes consistant à :
• détecter au moins un facteur d'authentification de l'utilisateur en utilisant le capteur d'authentification (118),
• valider le facteur d'authentification détecté en utilisant le premier élément de sécurité (110), et/ou
dans lequel l'étape consistant à confirmer l'authentification réussie de l'utilisateur comprend l'étape consistant à envoyer une confirmation d'authentification du second élément de sécurité (112) au programme d'application (108) en cas de validation réussie de la réponse.

9. Procédé selon l'une quelconque des revendications précédentes, dans lequel le programme d'application (108) est un programme d'application d'ID configuré pour gérer un ou plusieurs attributs d'identité associés à l'utilisateur.

10. Procédé selon la revendication 9, dans lequel le programme d'application d'ID est configuré pour envoyer un ou plusieurs des attributs d'identité de l'utilisateur à un dispositif de terminal (100) supplémentaire, ou
dans lequel le programme d'application d'ID est configuré pour envoyer un ou plusieurs des attributs d'identité de l'utilisateur en utilisant l'interface de communication (120) par le biais d'un réseau (150) à un serveur de fournisseur d'ID (240) pour les fournir à un serveur de fournisseur de services (260) et/ou pour confirmation au serveur de fournisseur de services (260).

11. Procédé selon l'une quelconque des revendications 9 à 10, dans lequel le programme d'application d'ID comprend un module de gestion d'ID (111) qui gère une pluralité de profils d'ID (113), dans lequel chacun des profils d'ID (113) est associé à un applet de sécurité (114) indépendant dans le second élément de sécurité (112).

12. Procédé selon la revendication 11, dans lequel chacun des profils d'ID (113) est associé à un ensemble d'un ou de plusieurs attributs d'identité.

13. Système (170), dans lequel le système (170) comprend un dispositif de terminal mobile (100) pour authentifier un utilisateur dans un programme d'application (108) installé sur un dispositif de terminal mobile (100), dans lequel le dispositif de terminal mobile (100) comprend un processeur (102), dans lequel un système d'exploitation (106) est installé sur le dispositif de terminal (100), dans lequel le système d'exploitation (106) est configuré pour commander au moins un capteur d'authentification (118) du dispositif de terminal (100) afin de détecter au moins un facteur d'authentification de l'utilisateur, dans lequel le dispositif de terminal (100) comprend un premier élément de sécurité (110) associé au système d'exploitation (106), dans lequel le premier élément de sécurité (110) comprend des moyens cryptographiques pour exécuter une méthode de challenge-réponse, dans lequel une clé cryptographique privée d'une paire de clés asymétriques du premier élément de sécurité (110) est stockée dans une zone de mémoire protégée du premier élément de sécurité (110),
dans lequel le système (170) comprend en outre un second élément de sécurité (112) indépendant du premier élément de sécurité (110), dans lequel le second élément de sécurité (112) comprend des moyens cryptographiques pour exécuter une méthode challenge-réponse,
dans lequel le processeur (102) est configuré pour exécuter un procédé d'authentification d'un utilisateur dans un programme d'application (108) installé sur un dispositif de terminal mobile (100), lequel procédé comprend les étapes consistant à :
• en réponse à une requête d'authentification du programme d'application (108), authentifier l'utilisateur par le système d'exploitation (106) en utilisant le capteur d'authentification (118) et le premier élément de sécurité (110),
• réaliser une méthode challenge-réponse entre le premier élément de sécurité (110) et le second élément de sécurité (112), dans lequel la méthode challenge-réponse comprend l'étape consistant à faire générer une réponse par le premier élément de sécurité (110) pour validation par le second élément de sécurité (112), dans lequel la génération de la réponse comprend le chiffrement d'un challenge du second élément de sécurité par le premier élément de sécurité (110) en utilisant la clé cryptographique privée du premier élément de sécurité (110) pour validation en déchiffrant la réponse du premier élément de sécurité (110) par le second élément de sécurité (112) en utilisant une clé cryptographique publique de la paire de clés asymétriques du premier élément de sécurité (110), dans lequel une exécution réussie de la méthode challenge-réponse confirme une authentification réussie de l'utilisateur par le système d'exploitation (106),
• en cas d'exécution réussie de la méthode challenge-réponse, confirmer l'authentification réussie de l'utilisateur au programme d'application (108) par le second élément de sécurité (112),
**caractérisé en ce que**
le procédé comprend en outre l'étape consistant à fournir la paire de clés asymétriques du premier élément de sécurité (110),
dans lequel l'étape consistant à fournir la paire de clés asymétriques du premier élément de sécurité (110) comprend les étapes consistant à :
• faire générer la paire de clés asymétriques par le premier élément de sécurité (110),
• transmettre la clé cryptographique publique de la paire de clés asymétriques du premier élément de sécurité (110) au second élément de sécurité (112),
dans lequel le dispositif de terminal mobile (100) comprend une interface de communication (120) pour communiquer par le biais d'un réseau (150), dans lequel l'étape consistant à transmettre la clé cryptographique publique de la paire de clés asymétriques du premier élément de sécurité (110) comprend les étapes consistant à :
• envoyer la clé cryptographique publique de la paire de clés asymétriques du premier élément de sécurité (110) du premier élément de sécurité (110) au programme d'application (108),
• transférer la clé cryptographique publique de la paire de clés asymétriques du premier élément de sécurité (110) depuis le programme d'application (108) en utilisant l'interface de communication (120) par le biais du réseau (150) jusqu'à un serveur de provisionnement externe (220) qui a une autorisation en écriture pour écrire dans une zone de mémoire du second élément de sécurité (112),
• valider l'autorisation en écriture du serveur de provisionnement (220) pour écrire dans la zone de mémoire du second élément de sécurité (112),
• en cas de validation réussie de l'autorisation en écriture du serveur de provisionnement (220), accorder un accès en écriture du serveur de provisionnement externe (220) par le biais de l'interface de communication (120) à la zone de mémoire du second élément de sécurité (112),
• écrire la clé cryptographique publique de la paire de clés asymétriques du premier élément de sécurité (110) dans la zone de mémoire du second élément de sécurité (112).

14. Système (170) selon la revendication 13, dans lequel le dispositif de terminal (100) comprend le second élément de sécurité (112), ou
dans lequel le dispositif de terminal (100) comprend une interface de communication (120) pour communiquer par le biais d'un réseau (150), dans lequel le système (170) comprend en outre un serveur (280) qui fournit le second élément de sécurité (112).

15. Système (170) selon l'une quelconque des revendications 13 à 14, dans lequel le système comprend en outre un serveur d'initialisation (200), dans lequel le serveur d'initialisation (200) est configuré pour initialiser le premier élément de sécurité (110) et comprend une permission en écriture pour initialiser le premier élément de sécurité (112), dans lequel l'initialisation comprend les étapes consistant à :
• faire générer la paire de clés asymétriques du premier élément de sécurité (110) par le premier élément de sécurité (110),
• valider l'autorisation en écriture du serveur d'initialisation (200) pour initialiser le second élément de sécurité (112),
• en cas de validation réussie de l'autorisation en écriture du serveur d'initialisation (200), accorder un accès en écriture du serveur d'initialisation externe (200) par le biais de l'interface de communication (120) au second élément de sécurité (112),
• initialiser le premier élément de sécurité (112),
• écrire la paire de clés asymétriques du premier élément de sécurité (110) dans la zone de mémoire initialisée, et/ou
dans lequel le système comprend en outre un serveur de provisionnement (220), dans lequel le serveur de provisionnement (220) est configuré pour provisionner le second élément de sécurité (112) et comprend une autorisation en écriture pour écrire dans une zone de mémoire du second élément de sécurité (112), dans lequel le provisionnement comprend les étapes consistant à :
• recevoir une clé cryptographique publique de la paire de clés asymétriques du premier élément de sécurité (110),
• valider l'autorisation en écriture du serveur de provisionnement (220) pour écrire dans la zone de mémoire du second élément de sécurité (112),
• en cas de validation réussie de l'autorisation en écriture du serveur de provisionnement (220), assurer un accès en écriture du serveur de provisionnement externe (220) par le biais de l'interface de communication (120) à la zone de mémoire du second élément de sécurité (112),
• écrire la clé cryptographique publique de la paire de clés asymétriques du premier élément de sécurité (110) dans la zone de mémoire du second élément de sécurité (112), et/ou
dans lequel le système comprend en outre un serveur de fournisseur d'ID (240), dans lequel le programme d'application (108) est un programme d'application d'ID configuré pour gérer un ou plusieurs attributs d'identité stockés dans le dispositif de terminal mobile (100) et associés à l'utilisateur, dans lequel le serveur de fournisseur d'ID (240) est configuré pour fournir et/ou confirmer un ou plusieurs des attributs d'identité de l'utilisateur pour un serveur de fournisseurs de services (260) et comprend une autorisation en lecture pour lire un ou plusieurs des attributs d'identité de l'utilisateur ; l'étape consistant à fournir et/ou confirmer un ou plusieurs des attributs d'identité de l'utilisateur pour un serveur de fournisseur de services (260) comprend les étapes consistant à :
• valider l'autorisation en lecture du serveur de fournisseur d'ID (240) pour lire un ou plusieurs des attributs d'identité de l'utilisateur,
• en cas de validation réussie de l'autorisation en lecture, envoyer un plusieurs des attributs d'identité de l'utilisateur au serveur de fournisseur d'ID (240),
• faire signer le ou les attributs d'identité de l'utilisateur envoyés par le serveur de fournisseur d'ID (240),
• envoyer le ou les attributs d'identité de l'utilisateur signés au serveur de fournisseur de services (260).
